# EUROPÄISCHE PATENTANMELDUNG

(11) **EP 3 422 694 A1**
(43) Veröffentlichungstag der Anmeldung: **02.01.2019**
(21) Anmeldenummer: 18182572.0
(22) Anmeldetag: 06.07.2015
(51) Int. Cl.: H04N 5/225

(54) **VORRICHTUNG UND VERFAHREN ZUR ERFASSUNG EINES OBJEKTBEREICHS**

(30) Priorität: 09.07.2014 DE 102014213371
(62) Teilanmeldung aus: 15741508.4
(71) Anmelder: FRAUNHOFER-GESELLSCHAFT zur Förderung der angewandten Forschung e.V., 80686 München (DE)
(72) Erfinder: Wippermann, Frank, 98617 Meiningen (DE); Brückner, Andreas, 07743 Jena (DE); Bräuer, Andreas, 07646 Schlöben (DE)
(74) Vertreter: König, Andreas Rudolf

(57) **Zusammenfassung**

Die Erfindung beschreibt eine Vorrichtung (10) zur Erfassung eines Objektbereichs (12; 12') mit einem flachen Gehäuse mit einer ersten Hauptseite (14), einer zweiten Hauptseite (16), einer Randseite (18a) und einer Multiaperturvorrichtung (22) mit einer Mehrzahl von lateral nebeneinander angeordneten und der Randseite (18a) zugewandten optischen Kanälen (24a; 24b), wobei jeder optische Kanal (24a; 24b) zur Erfassung eines jeweiligen Teilbereichs (26a; 26b; 26'a; 26'b) des Objektbereichs (12; 12') durch die Randseite (18a) hindurch oder entlang einer optischen Achse (32a; 32b) des jeweiligen optischen Kanals (24a; 24b), die zwischen einem lateralen Verlauf innerhalb des Gehäuses und einem nicht-lateralen Verlauf außerhalb des Gehäuses umgelenkt wird, ausgebildet ist, wobei die Teilbereiche (26a; 26b; 26'a; 26'b) der optischen Kanäle (24a; 24b) den Objektbereich (12; 12') abdecken.

## Beschreibung

Die Erfindung bezieht sich auf eine Vorrichtung zur Erfassung eines Objektbereichs.

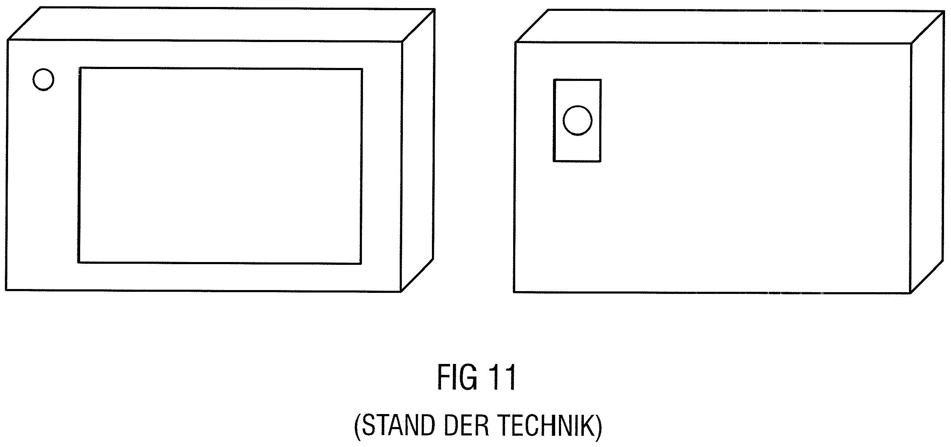

Viele Mobiltelefone oder Smartphones sind heute mit zumindest zwei Kameramodulen ausgestattet. Ein Kameramodul weist dabei häufig genau einen optischen Kanal zur Erfassung eines Teilbereiches des Objektbereiches auf. Beispielsweise befindet sich eine Primärkamera, die zum Aufnehmen von Fotos oder Videos optimiert sein kann, auf der dem Benutzer abgewandten Vorderseite oder zweiten Hauptseite des Gerätes, und eine Sekundärkamera, die beispielsweise für Videotelefonie optimiert sein kann, auf der dem Benutzer zugewandten Rückseite oder ersten Hauptseite des Gerätes. Es können also mithin zwei voneinander unabhängige Objektbereiche erfasst werden: ein erster Objektbereich, der der Vorderseite des Gehäuses zugewandt ist, sowie ein zweiter Objektbereich, der der Rückseite zugewandt ist. Fig. 11 zeigt zur Verdeutlichung eine herkömmliche Kamera bzw. zwei Kameramodule (durch Kreise angedeutet, Secondary Camera (Videotelefonie) links, Primary Camera (Fotokamera) rechts) in einem Smartphone gemäß dem Stand der Technik.

Im Zuge der zunehmenden Miniaturisierung ist eine der Hauptdesignaufgaben die Reduzierung der Dicke von Smartphones oder Mobiltelefonen. Hierbei ergibt sich bei der Integration des Kameramoduls bzw. der Kameramodule ein Problem: aus den physikalischen Gesetzen der Optik ergibt sich für jedes gegebene Kameramodul mit den lateralen Abmessungen X (in x-Richtung ausgedehnt) und Y (in y-Richtung ausgedehnt) eine Untergrenze für die Höhe des gesamten Kameramoduls Z (in z-Richtung ausgedehnt). Diese Höhe Z bestimmt beispielsweise bei Ausrichtung der Höhe Z entlang einer Dicke des Smartphones oder Mobiltelefons die minimale Dicke des gesamten Geräts. In anderen Worten bestimmt die Kamera oftmals die minimale Dicke des Smartphones.

Eine Möglichkeit, die Bauhöhe von Kameras zu verringern, besteht in der Nutzung von Multiaperturkameras, die eine Vielzahl nebeneinander angeordnete Abbildungskanäle umfassen. Hierbei kommen Verfahren der Superresolution zur Anwendung, wobei eine Halbierung der Bauhöhe erzielt werden kann. Grundsätzlich sind dabei zwei Prinzipien bekannt, die zum einen auf optischen Kanälen basieren, die jeweils das gesamte Gesichtsfeld übertragen (Pelican Imaging, u.a. WO 2009151903 A3, TOMBO Japan) und zum anderen nur einen Teilbereich des Gesamtgesichtsfeld abbilden (DE102009049387 und darauf aufbauend Anmeldung DE102013222780).

Eine Multiaperturvorrichtung kann einen Bildsensor mit einem Bildsensorbereich pro Kanal umfassen. Ein optischer Kanal der Multiaperturvorrichtung ist ausgebildet, um einen Teilbereich des Objektbereiches auf einen jeweiligen Bildsensorbereich abzubilden und weist dazu ein optisches Element oder eine Abbildungsoptik, wie etwa eine Linse, einen Ausschnitt aus einer dezentrierten Linse oder eine Freiformfläche, mit einem optischen Zentrum, auf.

Des Weiteren ist es mit einem einzelnen Kameramodul und damit einem einzelnen optischen Kanal nicht möglich, Tiefeninformationen über den damit erfassten Objektbereich zu erhalten. Hierfür sind zumindest zwei Kameramodule notwendig, wobei mit einem zunehmenden Abstand der Kameramodule zueinander die Tiefenauflösung maximiert werden kann. Die minimale Bauhöhe Z kann möglicherweise reduziert werden, wenn Multiaperturkameras mit Superresolution und einer linearen Anordnung der Kanäle genutzt werden (siehe abermals DE102009049387 und darauf aufbauend Anmeldung DE102013222780). Die Verkleinerung ist dabei jedoch abhängig von einem Superresolutionsfaktor, der in der Regel 2 nicht übersteigt.

Die Integration mehrerer Kameramodule erfordert zusätzlichen Platz, der beispielsweise bei einer Unterbringung des Kameramoduls in der dem Benutzer zugewandten Rückseite zur Erfassung eines Objektbereichs, der bspw. der Rückseite zugewandt ist, bei vielen handelsüblichen Smartphones häufig bereits durch die zusätzliche Integration eines Bildschirms in derselben Seite des Gehäuses limitiert ist.

Es ist weiterhin prinzipiell möglich, die Bauhöhe Z der einzelnen Kameraoptiken durch eine Reduzierung der Brennweite f der einzelnen Kameraoptiken zu reduzieren. Dem Fachmann ist jedoch wohlbekannt, dass dieser Ansatz nur bei Verkleinerung der Pixelgröße oder Verringerung der Anzahl der Pixel zu einer Reduzierung der Abbildungsqualität hinsichtlich Auflösung und/oder Bildrauschens führt.

Die Aufgabe der vorliegenden Erfindung besteht deshalb darin, eine Vorrichtung mit einer geringen Dicke bei gleicher Abbildungsqualität oder mit höherer Abbildungsqualität bei gleicher Dicke zu schaffen.

Diese Aufgabe wird durch den Gegenstand der unabhängigen Patentansprüche gelöst.

Der Kerngedanke der vorliegenden Erfindung besteht darin, erkannt zu haben, dass eine Vorrichtung zur Erfassung eines Objektbereichs dünner oder bei ähnlicher Dicke mit besserer Abbildungsqualität gemacht werden kann, indem für jeden Kanal die Erfassung eines jeweiligen Teilbereichs des Objektbereiches durch eine Randseite der Vorrichtung hindurch oder entlang einer jeweiligen optischen Achse, die zwischen einem lateralen Verlauf innerhalb des Gehäuses und einem nicht-lateralen Verlauf außerhalb des Gehäuses umgelenkt wird, vorgenommen wird. Eine Ausdehnung jedes Kanals entlang einer Tiefen- (z-) Richtung kann im Wesentlichen parallel zu einer Hauptseite, etwa Vorder- oder Rückseite der Vorrichtung zur Objekterfassung angeordnet sein, so dass eine Dicke der Vorrichtung zur Objekterfassung von einer Ausdehnung des Kameramoduls entlang einer x- oder y-Richtung beeinflusst und von einer Ausdehnung des Kameramoduls entlang der z-Richtung unabhängig sein kann.

Gemäß einem Ausführungsbeispiel wird eine Multiaperturvorrichtung, die zumindest zwei optische Kanäle und jeweils eine einem jeweiligen optischen Kanal zugeordnete optische Achse umfasst, dergestalt in einer Vorrichtung zur Objekterfassung, die zumindest eine Randseite sowie eine erste Hauptseite und eine zweite Hauptseite aufweist, angeordnet, dass die Erfassung eines Teilbereichs eines Objektbereichs durch die Randseite hindurch erfolgen kann. Werden die optischen Achsen zwischen einem lateralen Verlauf und einem nicht-lateralen Verlauf umgelenkt, so kann der Objektbereich beispielsweise der ersten oder zweiten Hauptseite zugewandt sein.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1: eine schematische perspektivische Ansicht einer Vorrichtung zur Erfassung eines Objektbereichs, die eine Multiaperturvorrichtung mit zwei optischen Kanälen aufweist;
- Fig. 2: eine schematische perspektivische Ansicht einer Vorrichtung zur Erfassung eines Objektbereichs, die eine Multiaperturvorrichtung mit vier optischen Kanälen aufweist;
- Fig. 3a: eine schematische Aufsicht auf eine Multiaperturvorrichtung mit einer Vielzahl von optischen Kanälen und Bildsensorbereictien in einer zeilenförmigen Struktur;
- Fig. 3b: eine schematische Darstellung einer zweidimensionalen Anordnung von optischen Kanälen zur Erfassung eines Objektbereichs, bei der die Anordnung der Bildsensorbereiche einer Position des Teilbereichs innerhalb des Objektbereichs entspricht;
- Fig. 4a: eine schematische Aufsicht auf einen Ausschnitt bzw. Abschnitt der Multiaperturvorrichtung aus Fig. 3a;
- Fig. 4b: eine schematische Aufsicht auf den Abschnitt aus Fig. 4a, bei dem die optischen Kanäle einen lateralen Versatz senkrecht zu einer Zeilenrichtung aufweisen, so dass die Bildsensorbereiche der einzelnen optischen Kanäle in gleicher Position senkrecht zu der Zeilenrichtung angeordnet sind;
- Fig. 4c: eine schematische Aufsicht auf ein Substrat mit einer Vielzahl von unterschiedlichen Abständen zueinander aufweisenden Bildsensorbereichen in einer Anordnung gemäß Fig. 4b;
- Fig. 4d: eine schematische Aufsicht auf ein Substrat mit einer Vielzahl von gleichen Abständen zueinander aufweisenden Bildsensorbereichen;
- Fig. 4e: eine schematische Aufsicht auf ein Substrat mit einer Vielzahl von abstandslos nebeneinander angeordneten Bildsensorbereichen;
- Fig. 4f: einen Imager gemäß Fig. 4b, wenn in den Zwischenräumen zwischen den Bildsensorbereichen weitere Bildsensorbereiche angeordnet sind;
- Fig. 5a: eine perspektivische Ansicht einer Vorrichtung zur Erfassung eines Objektbereichs in einem ersten Zustand;
- Fig. 5b: eine perspektivische Ansicht einer Vorrichtung zur Erfassung eines Objektbereichs in einem zweiten Zustand;
- Fig. 6: eine perspektivische Ansicht einer Vorrichtung zur Erfassung eines Objektbereichs, die zwei unterschiedliche Objektbereiche gleichzeitig oder simultan erfassen kann;
- Fig. 7: eine perspektivische Ansicht einer Vorrichtung zur Erfassung eines den beiden Hauptseiten abgewandten Objektbereichs;
- Fig. 8: eine perspektivische Ansicht einer Vorrichtung zur Erfassung eines der zweiten Hauptseite zugewandten Objektbereichs, die zusätzlich eine in der Multiaperturvorrichtung angeordnete Blitzlichtvorrichtung aufweist;
- Fig. 9a: eine perspektivische Ansicht einer Vorrichtung zur Erfassung zweier Objektbereiche in einem ersten Zustand, der die Erfassung eines der zweiten Hauptseite zugewandten Objektbereichs ermöglicht;
- Fig. 9b: eine perspektivische Ansicht einer Vorrichtung zur Erfassung zweier Objektbereiche in einem zweiten Zustand, der die Erfassung eines der ersten Hauptseite zugewandten Objektbereichs ermöglicht;
- Fig. 10: eine perspektivische Ansicht einer Vorrichtung zur Erfassung dreier unterschiedlicher Objektbereiche.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

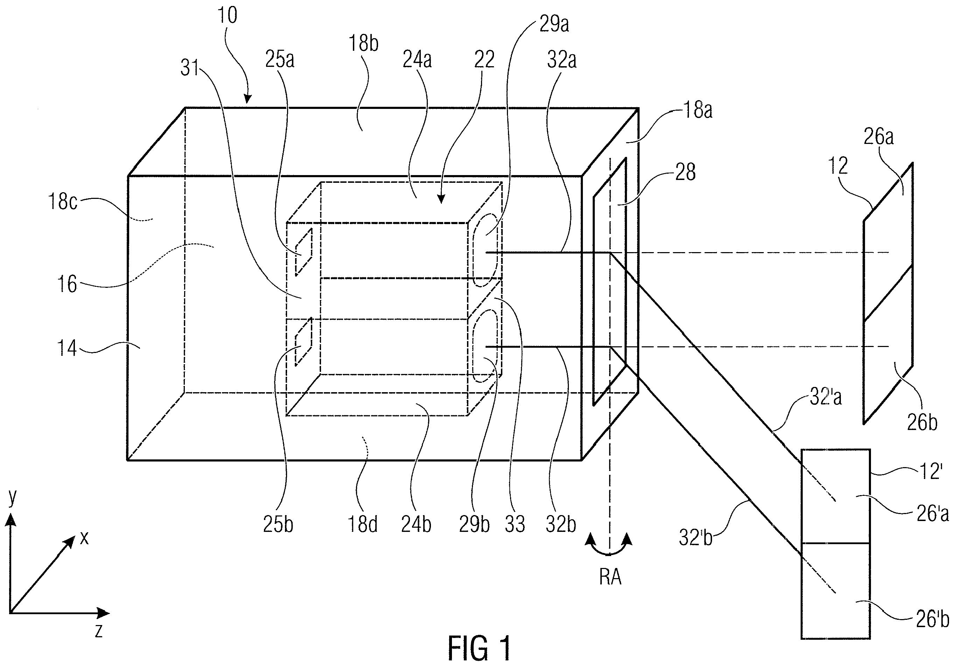

Fig. 1 zeigt eine schematische perspektivische Ansicht einer Vorrichtung 10 zur Erfassung eines Objektbereichs 12. Die Vorrichtung 10 weist ein flaches Gehäuse mit einer ersten Hauptseite 14 und einer gegenüberliegend angeordneten zweiten Hauptseite 16 auf. Die Vorrichtung 10 weist ferner Randseiten 18a-d auf, die zwischen der ersten Hauptseite 14 und der zweiten Hauptseite 16 angeordnet sind.

Die erste Hauptseite 14 und die zweite Hauptseite 16 sind beispielhaft jeweils in einer Ebene angeordnet, die parallel zu einer Ebene verläuft, die durch eine y-Achse und eine z-Achse aufgespannt wird. Die Randseite 18a sowie der Objektbereich 12 sind dagegen jeweils zu einer Ebene parallel, die durch eine x-Achse und die y-Achse aufgespannt wird. Anders ausgedrückt ist die Randseite 18a eine Seitenfläche, die zwischen den beiden Hauptseiten 14 und 16 der Vorrichtung 10 angeordnet ist. Die Randseite 18a und die Randseiten 18b-d können auch als Stirnseiten bezeichnet werden.

Die x-Achse, die y-Achse und die z-Achse sind orthogonal im Raum zueinander angeordnet und rechtshändig miteinander verknüpft. Es versteht sich, dass die Haupt- und/oder Randseiten Krümmungen aufweisen und/oder mit einer beliebigen Oberflächengeometrie gebildet sein können, etwa rund, elliptisch, polygonal, als Freiformfläche oder mit einer Kombination der selbigen. Alternativ kann Vorrichtung 10 eine andere Anzahl von Haupt- und/oder Randseiten aufweisen, etwa nur eine, zwei oder drei Randseiten.

Die Vorrichtung 10 weist eine Multiaperturvorrichtung 22 auf, die hier lediglich beispielhaft zwei optische Kanäle 24a und 24b umfasst. Die Multiaperturvorrichtung 22 kann auch eine beliebige andere Anzahl von optischen Kanälen umfassen, wie z. B., aber nicht ausschließlich, 6, 8, 10 oder mehr.

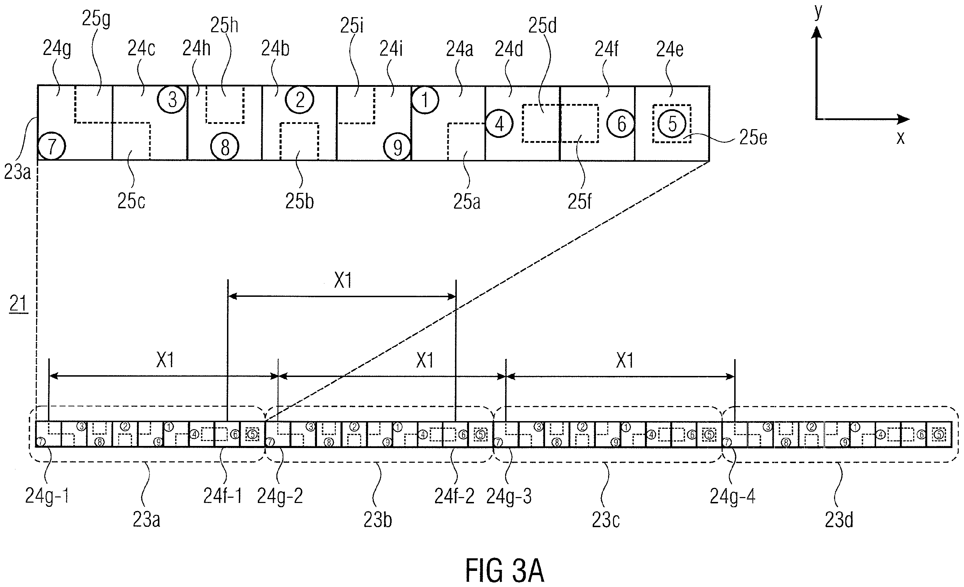

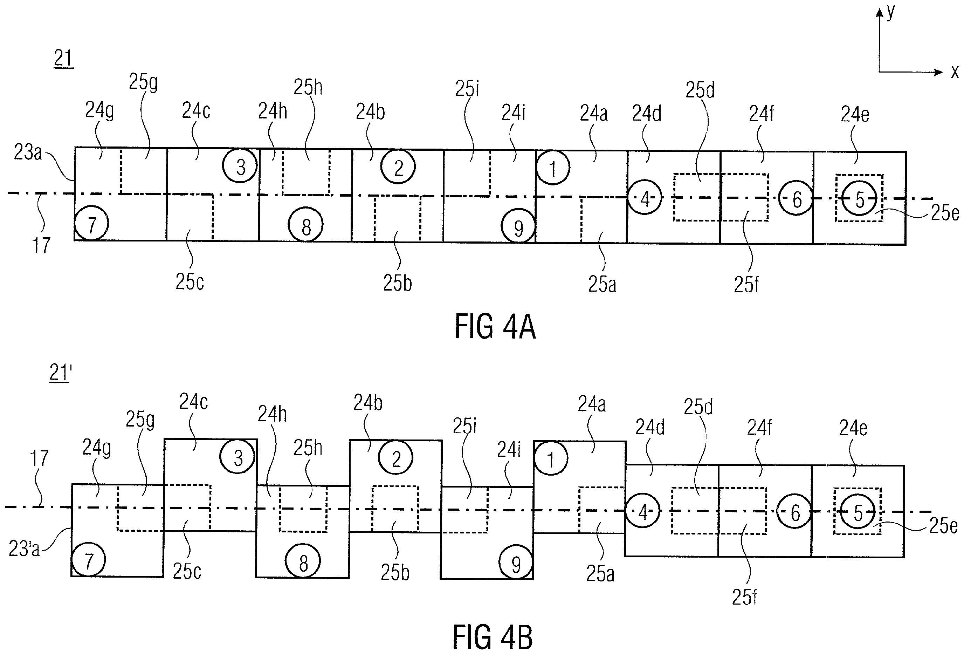

Jeder Kanal 24a,b umfasst eine Optik 29a,b, die hier lediglich veranschaulichend als eine kreisförmige Apertur aufweisend dargestellt sind und in einer Optikebene 33 liegen, und einen Bildsensorbereich 25a,b. Die Bildsensorbereiche 25a und 25b sind in einer Bildebene 31 angeordnet und jede Optik 29a,b bildet den jeweiligen Teilbereich des Objektbereichs auf den jeweiligen Sensorbereich ab. Eine ausführliche Diskussion über die Auswirkungen unterschiedlicher flächenhafter Ausdehnungen und/oder Positionierungen der Bildsensorbereiche folgt in den Beschreibungen der Figuren 3a und 4a-e. Die Bildebene 31 ist parallel zu der Randseite 18a und den Aperturen der Optiken 29a,b angeordnet, ebenso wie die Optikebene 33. Allerdings könnten eben alternativ auch die Randseite 18b oder eine der anderen Seiten als Blickdurchgang verwendet werden, um eine andere Objektebene als die in Fig. 1 gezeigte zu erfassen, oder es wird eine leicht verkippte Anordnung relativ zur Randseite 18b verwendet, um beispielsweise mit dem Array von Kanälen leicht nach unten oder oben zu "schauen".

Es wird ferner darauf hingewiesen, dass im Folgenden beschriebene alternativen Ausführungsformen von Multiaperturvorrichtungen gleichermaßen aufgebaute optische Kanäle aufweisen können. Aus Gründen der Übersichtlichkeit werden in den folgenden Ausführungsbeispielen optische Kanäle jedoch lediglich durch gestrichelt gezeichnete Quader angedeutet.

Die Multiaperturvorrichtung 22 ist dergestalt zwischen der ersten und zweiten Hauptseite 14 und 16 angeordnet, dass die Bildebene 31 parallel zu und zwischen den Randseiten 18a und 18c liegt.

Dem optischen Kanal 24a ist die optische Achse 32a zugeordnet und dem optischen Kanal 24b ist die optische Achse 32b zugeordnet. Die optischen Achsen 32a und 32b sind hier exemplarisch näherungsweise parallel und im Inneren des Gehäuses vornehmlich entlang der z-Achse verlaufend dargestellt, wobei allerdings auch andere Konfigurationen möglich sind, wie z. B. ein divergenter Verlauf der Achsen 32a und 32b von der Multiaperturvorrichtung 22 zum Objektbereich 12 bzw. zur Seite 18a hin.

Die Kanäle 24a,b sind entlang der transversalen Richtung y nebeneinanderliegend angeordnet und entlang der lateralen Richtung z ausgerichtet, d.h. der Randseite 18a zugewandt. Sie befinden sich beispielsweise - wie z.B. mit den optischen Zentren ihrer Optiken 29a,b - auf einer gemeinsamen Linie entlang y, um so ein eindimensionales Array bzw. eine Zeile von optischen Kanälen zu bilden, das sich entlang einer Längsausrichtung der Randseite 18a erstreckt.

Jeder der optischen Kanäle 24a und 24b ist ausgebildet, um einen Teilbereich 26a bzw. 26b des Objektbereichs 12 entlang der jeweiligen optischen Achse 32a bzw. 32b zu erfassen. Die Teilbereiche 26a und 26b könnten jeweils gänzlich den gesamten Objektbereich 12 abdecken. In den nachfolgend näher beschriebenen Ausführungsbeispielen decken die Kanäle jeweils nur teilweise und nur in Gänze zusammen den gesamten Objektbereich 12 ab. Im letztgenannten Fall ist es möglich, dass sich die Bereiche gegenseitig überlappen oder nahtlos aneinander anschließen.

Es sei ferner darauf hingewiesen, dass die hier gezeigte Aufteilung des Objektbereichs 12 in die Teilbereiche 26a und 26b lediglich beispielhaft ist. In der Fig. 1 ist beispielsweise dargestellt, dass Mitten der Teilbereiche 26a und 26b in y-Richtung nebeneinander liegen, in der gleichen Reichenfolge, wie die zugeordneten optischen Kanäle 24a bzw. b, d. h. dass die Teilbereiche 26a bzw. b quasi ebenfalls entlang einer Linie parallel zu y angeordnet sind, um ein eindimensionales Array zu bilden. Theoretisch wäre aber auch eine andere Anordnung denkbar, wie z. B: eine Nebeneinanderanordnung quer zur Nebeneinanderanordnungsrichtung y der Kanäle 24a,b, nämlich entlang x. Falls die Anzahl der Kanäle bzw. Teilbereiche größer ist, könnte es auch sein, dass die durch die Kanäle abgetasteten Teilbereiche, beispielsweise mit ihren Mitten, ein zweidimensionales Array bilden. Dabei können sich die Teilbereiche - wie vorher erwähnt - gegenseitig überlappen oder nicht.

Die Vorrichtung 10 weist weiterhin exemplarisch ein strahlumlenkendes Element 28 auf, das ausgebildet ist, um die optischen Achsen 32a und 32b der optischen Kanäle 24a und 24b reflektiv umzulenken und den Objektbereich 12 umzuverlegen. Das strahlumlenkende Element 28 ist in Fig. 1 exemplarisch an der Randseite 18a angeordnet.

Das strahlumlenkende Element 28 kann ortsfest oder um eine in Richtung der y-Achse verlaufende Rotations- oder Drehachse RA dreh- oder verkippbar gelagert sein, um eine reflektive Umlenkung der optischen Achsen 32a und 32b zu ermöglichen. Eine solche Verkippung oder reflektive Umlenkung kann möglicherweise auch für jede einzelne optische Achse 32a bzw. 32b individuell erfolgen und/oder auch dergestalt, dass nur der Verlauf von einer der optischen Achsen verändert, d. h. verkippt oder umgelenkt, wird.

Eine reflektive Umlenkung der optischen Achsen 32a und 32b kann in einem veränderten Verlauf der optischen Achsen 32a und 32b jeweils hin zu optischen Achsen 32'a und 32'b resultieren, so dass die optischen Kanäle 24a und 24b ausgebildet sind, um einen Objektbereich 12' mit Teilbereichen 26'a und 26'b zu erfassen, der gegenüber dem Objektbereich 12 beispielsweise durch eine Rotation um die Achse RA oder eine dazu parallele Achse umverlegt ist, wenn die optischen Kanäle 32a und 32b an dem strahlumlenkenden Element 28 umgelenkt werden. Das bedeutet, dass der erfasste Objektbereich 12 mittels der reflektiven Umlenkung durch das strahlumlenkende Element 28 im Raum verschiebbar ist. Anders ausgedrückt ist mittels der reflektiven Umlenkung der Objektbereich 12 auf den Objektbereich 12' abbildbar, und umgekehrt. Die Umlenkung bewirkt ferner, dass die optischen Achsen 32a und 32b zwischen einem lateralen Verlauf entlang einer ersten Richtung, beispielsweise entlang der z-Richtung, und einem nicht-lateralen Verlauf entlang einer zweiten Richtung, der von dem strahlumlenkenden Element 28 beeinflusst sein kann, umgelenkt werden. Die Teilbereiche 26'a und 26'b können den Objektbereich 12' abdecken.

Vorteilhaft an der in Fig. 1 gezeigten Ausführungsform ist, dass eine Dicke der Vorrichtung 10 zur Objekterfassung von einer Ausdehnung der Multiaperturvorrichtung 22 in Richtung der x- oder y-Achse beeinflusst und von einer Ausdehnung der Multiaperturvorrichtung in Richtung der z-Achse unabhängig sein kann. In anderen Worten können die Randseiten 18a-d also mithin eine geringe Ausdehnung in x-Richtung aufweisen.

Vorteilhaft an dieser Ausführungsform ist weiterhin, dass durch eine beliebige optische Umlenkung der optischen Achsen beliebig im Raum angeordnete oder positionierte Objektbereiche erfasst werden können. Alternativ ist auch vorstellbar, dass mehr als ein Objektbereich, also beispielsweise zwei oder drei unterschiedliche und/oder unterschiedlich positionierte oder orientierte Objektbereiche, erfasst werden können, was durch eine kanal- oder kanalgruppenweise unterschiedliche Ausgestaltung des strahlumlenkenden Elements 28 erreicht werden kann. Die Umlenkfähigkeit der Vorrichtung 10 ist allerdings nur optional und kann, wie nachfolgend beschrieben, auch fehlen.

Sowohl die Multiaperturvorrichtung 22 als auch das strahlumlenkende Element 28 können auch an einer anderen Stelle innerhalb der Vorrichtung 10 angeordnet sein. Es ist auch denkbar, dass sowohl die Multiaperturvorrichtung 22 als auch das strahlumlenkende Element 28 in der Randseite 18a oder in einer anderen Randseite 18b-d angeordnet sind.

Die Multiaperturvorrichtung 22 kann ferner auch mehr als zwei optische Kanäle umfassen, denen jeweils eine entsprechende Mehrzahl von optischen Achsen zugeordnet sein kann. Die Mehrzahl von optischen Kanälen kann zur Erfassung von zwei oder mehr Teilbereichen eines Objektbereichs ausgebildet sein. Es ist ebenso denkbar, dass die einzelnen optischen Kanäle in zumindest zwei Gruppen angeordnet sind, wobei beispielsweise eine erste Gruppe von optischen Kanälen zur Erfassung eines ersten Teilbereichs des Objektbereichs ausgebildet sein kann und eine zweite Gruppe von optischen Kanälen zur Erfassung eines zweiten Teilbereichs des Objektbereichs ausgebildet sein kann. Dies kann zur Auflösungssteigerung verwendet werden, indem beispielsweise die optischen Kanäle einer Gruppe den jeweiligen Teilbereich um einen Subpixelabstand versetzt zueinander abtasten und Verfahren der Superresolution zur Anwendung kommen.

Bei dem strahlumlenkenden Element 28 kann es sich beispielsweise um einen Spiegel oder eine (teilweise) reflektierende kontinuierliche oder diskontinuierliche Oberfläche handeln. Alternativ könnte ein anderes strahlumlenkendes oder strahlformendes Element Verwendung finden, wie z. B. ein Prisma, eine Linse, ein refraktives oder diffraktives Linsenelement oder eine Kombination solcher Elemente.

Bei der Vorrichtung 10 kann es sich etwa um eine Kamera, ein Mobiltelefon oder Smartphone, ein Bildschirm- oder TV-Gerät, einen Computerbildschirm oder jedwede zur Bild- und/oder Videoaufnahme oder zur Erfassung eines Objektbereichs geeignete Vorrichtung handeln.

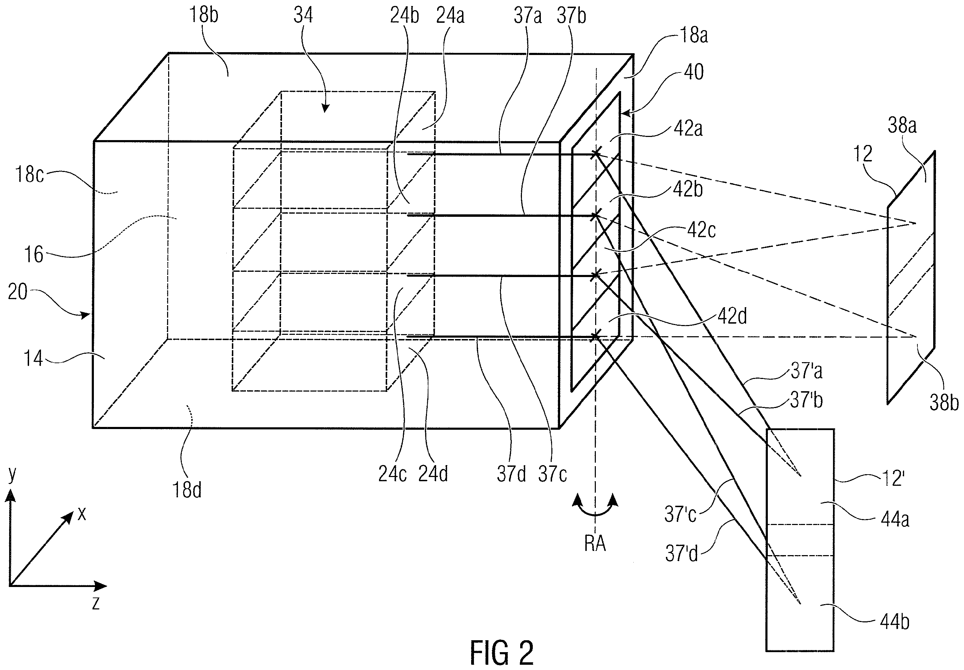

Fig. 2 zeigt eine schematische perspektivische Ansicht einer Vorrichtung zur Objekterfassung 20, die wiederum die erste Hauptseite 14, die zweite Hauptseite 16 sowie die Randseiten 18a-d aufweist. Die Vorrichtung 20 weist weiterhin eine Multiaperturvorrichtung 34 auf. Die Multiaperturvorrichtung 34 umfasst hier exemplarisch vier optische Kanäle 24a, 24b, 24c und 24d. Die Multiaperturvorrichtung 34 ist so in der Vorrichtung 20 angeordnet, dass den optischen Kanälen 24a-d jeweils zugeordnete optische Achsen 37a, 37b, 37c und 37d jeweils lateral oder in z-Richtung hin zu der Randseite 18 verlaufen. Die einzelnen optischen Achsen können dabei abschnittsweise, etwa zwischen der Multiaperturvorrichtung 34 und einem in der Randseite 18a angeordneten strahlumlenkenden Element 40, parallel sein, oder aber divergent. Die optischen Kanäle 24a-d sind zur Erfassung des Objektbereiches 12 ausgebildet. Der Objektbereich 12 ist parallel zu der Randseite 18a angeordnet und umfasst die Teilbereiche 38a und 38b, die sich hier examplarisch teilweise überlappen. Bezüglich weiterer Alternativen der Anordnung der Teilbereiche innerhalb des Objektbereichs 12 wird auf die Ausführungen zu Fig.1 verwiesen.

Eine erste Gruppe von optischen Kanälen umfasst die optischen Kanäle 24a und 24c, während eine zweite Gruppe von optischen Kanälen die optischen Kanäle 24b und 24d umfasst. Die erste Gruppe von optischen Kanälen ist zur Erfassung des ersten Teilbereiches 38a des Objektbereichs 12 ausgebildet. Die zweite Gruppe von optischen Kanälen ist zur Erfassung des zweiten Teilbereiches 38b des Objektbereichs 12 ausgebildet.

Das strahlumlenkende Element 40 umfasst Teilelemente 42a, 42b, 42c und 42d. Vermittels der Teilelemente 42a-d kann eine reflektive Umlenkung der optischen Achsen 37a-d hin zu optischen Achsen 37'a-d erfolgen, so dass die erste Gruppe von optischen Kanälen einen Teilbereich 44a eines zweiten Objektbereichs 12' erfasst und die zweite Gruppe von optischen Kanälen einen Teilbereich 44b des Objektbereichs 12' erfasst. Die Teilbereiche 44a und 44b können sich teilweise oder vollständig überlappen.

Die Multiaperturvorrichtung 34 kann auch eine beliebige andere Anzahl von optischen Kanälen umfassen, wie z. B., aber nicht ausschließlich, 6, 8, 10 oder mehr. Eine Anzahl optischer Kanäle der ersten Gruppe kann dabei gleich einer Anzahl optischer Kanäle der zweiten Gruppe sein, aber auch beliebige andere Einteilungen optischer Kanäle in eine Mehrzahl von Gruppen sind denkbar. Dabei kann die jeweilige Gruppe von optischen Kanälen so ausgestaltet sein, dass eine Erfassung einer Mehrzahl unterschiedlich positionierter und/oder orientierter Objektbereiche dergestalt ermöglicht wird, dass die jeweilige Gruppe jeweils einen Teilbereich des jeweiligen Objektbereichs erfasst. Eine teilweise oder ganze Überlappung jeweiliger Teilbereiche eines erfassten Objektbereichs kann dabei beispielsweise in einer verbesserten (Tiefen-) Auflösung resultieren.

Die Teilelemente 42a-d können weiterhin so ausgestaltet sein, dass sie die den einzelnen optischen Kanälen 24a-d zugeordneten optischen Achsen 37a-d in eine nicht laterale Richtung umlenken können. Die nicht-lateralen Bereiche können wie beschrieben durch unterschiedliche Winkel der einzelnen Bereiche erzielt werden, aber auch durch die kanalweise unterschiedlichen lateralen Versätze der jeweiligen Bildbereiche und ihrer zugeordneten Optiken, so wie in den bisherigen Lösungen. Dies kann beispielsweise für jede einzelne optische Achse 37a-d individuell, aber auch für einzelne Gruppen von optischen Kanälen bzw. Achsen erfolgen. Eine individuelle Umlenkung einzelner optischer Achsen kann beispielsweise erreicht werden, wenn die Teilelemente 42a-d eine voneinander verschiedene Neigung gegenüber der Randseite 18a aufweisen. Es ist denkbar, dass die Teilelemente 42a-d unabhängig voneinander um eine in y-Richtung verlaufende, in der Randseite 18a angeordnete Rotationsachse RA, verkippbar ausgestaltet sind. Auch eine individuelle Verkippung der einzelnen Teilelemente 42a-d um eine beliebig orientierte Rotationachse oder einer Mehrzahl von verschieden orientierten und/oder verschieden zueinander positionierten Rotationsachsen ist möglich. Die einzelnen Teilelemente 42a-d können weiterhin dergestalt ausgeformt sein, dass eine Konfiguration resp. Verkippung beispielsweise mechanisch durch einen Benutzer oder eine entsprechende Steuervorrichtung automatisiert erfolgen kann.

Vorteilhaft an dieser Ausführungsform ist, dass die Vorrichtung 20 bei unveränderter Position und Orientierung einen veränderlichen Objektbereich erfassen kann. Auch die gleichzeitige Erfassung einer Mehrzahl von unterschiedlich positionierten Objektbereichen ist denkbar. Eine Multiaperturvorrichtung mit zumindest zwei optischen Kanälen kann ferner zum Aufnehmen von Tiefeninformationen eines jeweiligen erfassten Objektbereichs ausgebildet sein.

Die nun folgenden Figuren 3a-b und 4a-f zeigen jeweils perspektivische Aufsichten optischer Kanäle. Dazu sei angemerkt, dass hier die Aperturen der Optiken mit durchgezogenen Linien exemplarisch als quadratisch dargestellt sind. Eine Apertur ist dabei einem optischen Kanal 24a-i jeweils zugeordnet. Aus Gründen der Übersichtlichkeit sind in den folgenden Figuren jedoch nur die optischen Kanäle 24a-i mit Bezugszeichen versehen.

Fig. 3a zeigt in einem unteren Bildbereich exemplarisch eine schematische Aufsicht auf eine Multiaperturvorrichtung 21 mit einer Vielzahl von Gruppen 23a, 23b, 23c und 23d von optischen Kanälen 24a-i, die gruppenweise unterschiedliche Teilbereiche des Objektbereichs abtasten. Jede Gruppe 23a-d von optischen Kanälen 24a-i ist hier exemplarisch gleich aufgebaut. Alle Kanäle aller Gruppen sind entlang einer Linie angeordnet, so dass zunächst die optischen Kanäle 24a-i nebeneinander liegend einen ersten Abschnitt 23a der Multiaperturvorrichtung 21 einnehmen, dann die optischen Kanäle 24a-i nebeneinander liegend einen nächsten, zweiten Abschnitt 23b entlang der Linie einnehmen usw.

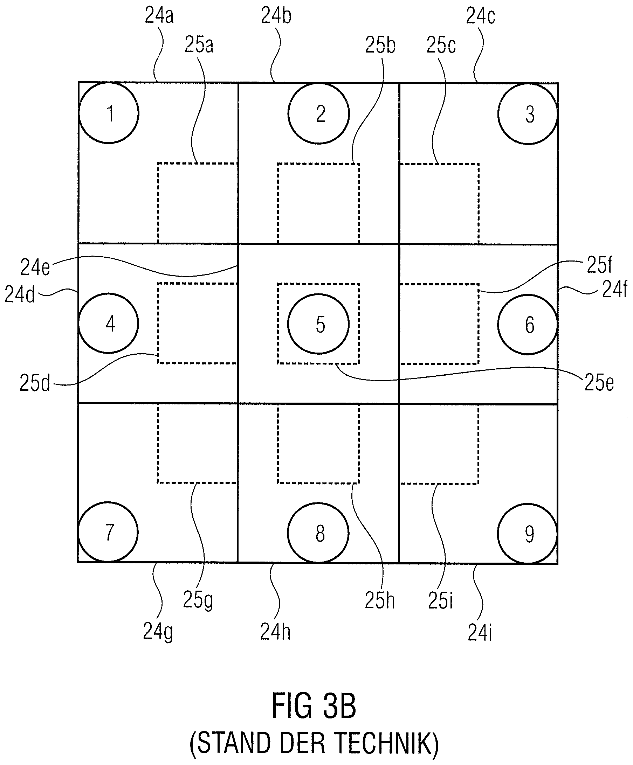

In einem oberen Bildbereich zeigt Fig. 3a eine schematische Detailansicht eines Abschnitts 23a der Multiaperturvorrichtung 21. Ein optischer Kanal 24a-i ist beispielsweise ausgebildet, um jeweils einen Teilbereich des Objektbereichs zu erfassen und umfasst jeweils einen Bildsensorbereich 25a-i auf dem Bildwandler, wie es durch die gestrichelten Linien innerhalb der optischen Kanäle angedeutet ist. Die Fläche eines jeweiligen Bildsensorbereichs 25a-i eines optischen Kanals 24a-i kann kleiner sein als die Fläche des jeweiligen optischen Kanals 24a-i. Die Bildsensorbereiche 25a-i aller Abschnitte 23 können auf einem gemeinsamen Substrat angeordnet sein (single chip). Wie es durch die verschiedenen Orientierungen bzw. Lagen der Bildsensorbereiche 25a-i bezüglich der optischen Zentren ihrer optischen Kanäle 24a-i angedeutet ist, weisen die optischen Kanäle 24a-i in jedem Abschnitt einen voneinander verschiedenen Blickwinkel auf, d. h. die optischen Kanäle 24a-i sind ausgebildet, einen von einander verschiedenen Teilbereich des Objektbereichs zu erfassen. Dabei wird in Fig. 3 exemplarisch angenommen, dass die optischen Zentren mittig bezüglich der Aperturen der Optiken angeordnet sind, was aber auch anders ausgeführt sein könnte. Wie es ebenfalls durch die mit gestrichelten Linien gezeichneten Quadrate und die Nummerierungen der optischen Kanäle angedeutet ist, sind die optischen Kanäle 24a-i so angeordnet, dass sich benachbarte Teilbereiche des Objektbereichs, wie etwa (7) und (8) oder (8) und (9), überlappen (Die Bezugszeichen (1) bis (9) sind in dieser Figur und den folgenden Figuren als von jeweils einem Kreis umschlossene natürliche Zahlen 1 bis 9 dargestellt). Die Überlappung der Teilbereiche ermöglicht eine Auswertung der Anschlüsse, d. h. der in verschiedenen Teilbereichen gleichen Bildinhalte, um auf Tiefeninformationen schließen zu können und um Bildinformationen aus Teilbildern zu extrahieren und damit ein Gesamtbild eines Gesamtobjekts zusammenzustellen. Vereinfachend sind die Bildsensorbereiche 25a-i mit einer Abmessung in x- und y-Richtung von 50% der optischen Kanäle 24a-i dargestellt. Alternativ können die Abmessungen der Bildsensorbereiche 25a-i in x- und/oder y-Richtung ein beliebiges Verhältnis zu Abmessungen der optischen Kanäle 24a-i aufweisen. Positionen der Bildsensorbereiche können zumindest teilweise abhängig von einer Position der Mitte der optischen Zentren des optischen Elements innerhalb der Grundfläche des jeweiligen optischen Kanals bestimmt sein.

Die schematische Detailansicht eines Abschnitts 23a im oberen Bildbereich zeigt neun optische Kanäle 24a-i, die jeweils einen Bildsensorbereich 25a-i umfassen. Basierend auf der Blickrichtung des jeweiligen optischen Kanals 24a-i, die bspw. durch die Verbindungslinie zwischen optischem Zentrum und Bildbereichsmitte definiert ist, ist der Bildsensorbereich 25a-i innerhalb einer Grundfläche der optischen Kanäle 24a-i verschoben, wie es durch die gestrichelten Linien angedeutet ist. Eine Nummerierung innerhalb der optischen Kanäle dient lediglich der Veranschaulichung der Anordnung der Teilbereiche und einer vereinfachten Unterscheidung der optischen Kanäle. Abhängig von der Orientierung, d. h. Blickrichtung des jeweiligen optischen Kanals 24a-i, wie es auch durch die Nummerierung (1) bis (9) (Bezugszeichen in der Figur sind von Kreisen umschlossene Zahlen von 1 bis 9) angedeutet ist, sind die optischen Kanäle 24a-i ausgebildet, um neun Teilbereiche des Objektbereichs zu erfassen. Alternativ kann der Objektbereich auch eine beliebige Anzahl von Unterteilungen in Teilbereiche aufweisen. Jeder Teilbereich wird mit einer Anzahl entsprechend der Anzahl der Abschnitte 23a-d, wie etwa im dargestellten Beispiel von vier, erfasst.

Die vier Abschnitte 23a-d weisen exemplarisch eine identische Sortierreihenfolge der optischen Kanäle 24a-i auf. In anderen Worten weist jeder Teilbereich 23a-d je einen optischen Kanal 24a, 24b, 24c, ..., 24i auf, wobei die optischen Kanäle 24a-i jeweils lateral benachbart in einer einzeiligen Struktur angeordnet sind. Die vier Teilbereiche 23a-d sind jeweils lateral benachbart angeordnet, sodass die Gesamtzahl an optischen Kanälen ebenfalls lateral benachbart in einer Zeile nebeneinander angeordnet ist. Die Anordnung der optischen Kanäle 24a-i ist einzeilig, was auch als eine Form 1xN beschrieben werden kann. Die Zeile verläuft parallel zu der Randseite 18a und den Hauptseiten 14 und 16.

Die Anzahl der Abschnitte 23a-d kann aus einem zu erzielenden Superresolutionfaktor resultieren. Für eine Erzielung der Auflösungserhöhung um den gewünschten Superresolutionfaktor können in x-Richtung entsprechend viele optische Kanäle ausgebildet sein, wobei die jeweiligen Kanäle 24g-1, 24g-2, 24g-3 und 24g-4 im Wesentlichen denselben Teilbereich des Objektbereichs betrachten. Die Bildsensorbereiche 25a können in den jeweiligen Teilbereichen, d. h. Abschnitten, 23a-d bezüglich ihren zugeordneten optischen Kanälen 24g-1 bis 24g-4 beispielsweise um einen halben Pixel, d. h. mit einem Pixelpitch, der der Hälfte einer Ausdehnung eines Pixels in einer Richtung lateral zu einer Zeilenrichtung entspricht, in x- und/oder y-Richtung vorschoben sein. So können sich beispielsweise die Bildsensorbereiche 25a der Abschnitte 23a und 23b bezüglich ihrer jeweilig zugeordneten Kanäle 24a in der x-Richtung und/oder der y-Richtung um einen halben Pixel unterscheiden und in y-Richtung nicht unterscheiden, der Bildsensorbereich 25a des Abschnitts 23c um einen halben Pixel in y-Richtung und/oder in x-Richtung von dem Bildsensorbereich 25a des Abschnitts 23a und der Bildsensorbereich 25a des Abschnitts 23d bspw. sowohl in x- als auch in y-Richtung um einen halben Pixel gegenüber dem Bildsensorbereich 25a des Abschnitts 23a unterscheiden. Die Anzahl von Abschnitten 23 kann damit auch als Produkt von Superresolutionsfaktoren in x- und y-Richtung bezeichnet werden, wobei die Faktoren ganzzahlig unterschiedlich sein können.

Die optischen Kanäle 24g-1, 24g-2, 24g-3 und/oder 24g-4 zur Erfassung eines im Wesentlichen gleichen Teilbereichs des Objektbereichs können einen beliebigen lateralen Versatz zueinander in einer Richtung senkrecht zu einer Zeilenrichtung bzw. senkrecht zu einer Richtung eines Abstands X1 aufweisen. Wenn dieser Abstand einen Bruchteil, wie bspw. 1/4, 1/3 oder 1/2, eines Abstandes zwischen zwei Pixeln, d. h. Teilbildbereichen, beträgt, kann dieser Versatz auch als Subpixelversatz bezeichnet werden. Der Subpixelversatz kann bspw. auf einem gewünschten Superresolutionsfaktor basieren. Wird bspw. ein Superresolutionsfaktor von 2 umgesetzt und ein Teilbereich des Objektbereichs in x- und y-Richtung 2-fach erfasst, so kann der Subpixelversatz bspw. 1/2 der Pixelbreite entsprechen. Der Versatz kann bspw. genutzt werden, um eine Ortsauflösung des Objektbereichs zu erhöhen. In anderen Worten ist es aufgrund einer Verschränkung der optischen Kanäle möglich, dass Abtastlücken eines optischen Kanals durch einen benachbarten optischen Kanal erfasst werden. Alternativ können die die optischen Kanäle 24g-1, 24g-2, 24g-3 oder 24g-4 zur Erfassung eines im Wesentlichen gleichen Teilbereichs auch versatzfrei angeordnet sein.

Durch den Subpixelversatz der optischen Kanäle 24g-1, 24g-2, 24g-3 und/oder 24g-4, die denselben Teilbereich des Objekts abbilden, kann vermittels eines Überabtastungsalgorithmusses (Super Resolution Algorithmus) aus einer Vielzahl niedrig aufgelöster Mikrobilder pro optischem Kanal 24g-1, 24g-2, 24g-3 und/oder 24g-4 die Errechnung eines hoch aufgelösten Gesamtbilds erfolgen. In anderen Worten können Mittelpunkte der Bildsensorbereiche 25g der optischen Kanäle 24g-1, 24g-2, 24g-3 und/oder 24g-4 verschoben angeordnet sein, so dass zumindest zwei der optischen Kanäle 24g-1, 24g-2, 24g-3, und/oder 24g-4 mit einem Pixelpitch oder einem Bruchteil eines Pixelpitches oder einem (Sub-) Pixelversatz unterschiedliche, teilweise überlappende Erfassungsbereiche aufweisen. Ein Überlappbereich der Erfassungsbereiche zweier optischer Kanäle 24g-1, 24g-2, 24g-3, und/oder 24g-4 kann so versetzt auf einen Bilderfassungssensor abgebildet werden.

Die identische Sortierreihenfolge der Teilbereiche 23a-d und mithin der optischen Kanäle, die einen zumindest annähernd gleichen Teilbereich des Objektbereiches erfassen, wie etwa der optischen Kanäle 24g-1, 24g-2, 24g-3 und 24g-4, ermöglicht einen größtmöglichen lateralen Abstand entlang einer Ausbildung einer Zeilenstruktur. Wie es durch die Abstände zwischen den Bildsensorbereichen 25a-i entlang der Ausbildung der Zeilenstruktur angedeutet ist, können zwischen den Bildsensorbereichen 25a-i der optischen Kanäle 24a-i optische Leerräume, d. h. Zwischenräume, ausgebildet sein. In diesen Zwischenbereichen, d. h. in den Bereichen zwischen den Teilbildwandlern, können beispielsweise nicht-lichtsensitive elektronische Komponenten, wie etwa Ausleseschaltkreise, Analog-Digital-Wandler (ADCs), Verstärker, etc. angeordnet sein.

Die Anordnung der optischen Kanäle in den Abschnitten 23a-d ist beispielsweise verschränkt und regelmäßig, so dass ein Abstand X1 für optische Kanäle, die den gleichen oder im Wesentlichen gleichen bzw. selben Teilbereich erfassen, konstant ist, wie etwa für die optischen Kanäle 24g-1 bis 24g-4 oder 24f-1 und 24f-2.

Der Abstand X1 kann sowohl als Maximum als auch als äquidistanter Abstand bezeichnet werden, da er für jeden Teilbereich 23a-d und jeden optischen Kanal 24a-i des jeweiligen Teilbereichs gilt.

In anderen Worten sind optische Kanäle, die die annähernd gleichen und nur um einen Teil eines Gesichtsfelds eines Pixels versetzten Teilbereiche erfassen, in der streifenförmigen Anordnung voneinander maximal mit dem Abstand X1 entfernt. Hieraus kann eine große bis maximale Disparität erreicht werden und damit diesbezüglich eine verbesserte bis bestmögliche Tiefenauflösung.

Alternative Ausführungsbeispiele sind etwa Multiaperturvorrichtungen, die eine größere Anzahl von optischen Kanälen aufweisen. Eine Anzahl von Abschnitten 23a-d, in welchen die optischen Kanäle teilweise angeordnet sind, kann gemäß Superresolutionsprinzip ein Quadrat einer natürlichen Zahl, wie bspw. 2², 3² oder 4² sein. Alternativ ist ebenfalls vorstellbar, dass eine andere Anzahl von Abschnitten in der Multiaperturvorrichtung angeordnet ist, wie bspw. 2, 3, 5, 7 oder 11.

In anderen Worten zeigt Fig. 3a ein in x-Richtung kleinbauendes Abbildungssystem mit optimierter Gewinnung von Tiefeninformationen infolge einer größtmöglichen Basislänge X1. Die optischen Kanäle der Multiaperturvorrichtung weisen dabei eine lineare Anordnung auf, das heißt, sie sind in einer Reihe angeordnet.

Fig. 3b zeigt exemplarisch zu der Anordnung von Gruppen oder Abschnitten von optischen Kanälen 24a-i von Fig. 3a die Anordnung der von den optischen Kanälen erfassten Teilbereiche innerhalb des Objektbereichs. Eine derartige Anordnung ist beispielsweise in der DE 10 2009 049387 beschrieben. Wie gesagt ist in jedem Abschnitt jeder der optischen Kanäle 24a-i ausgebildet, um einen anderen Teilbereich des Objektbereichs zu erfassen, wie es durch jeweils verschobene Bildsensorbereiche 25a-i angedeutet ist. In anderen Worten weist jeder der optischen Kanäle 24a-i eine unterschiedliche Blickrichtung auf den Objektbereich auf. Die Teilbereiche benachbarter optischer Kanäle, wie etwa 24a und 24b oder 24e und 24f oder 24d und 24g überlappen sich teilweise, das bedeutet, benachbarte optische Kanäle erfassen teilweise gleiche Bildinhalte, um so auf einen Objektabstand schließen zu können. Fig. 3b zeigt dabei lediglich eine Anordnung optischer Kanäle zur Verdeutlichung der Einflüsse unterschiedlicher Blickrichtungen optischer Kanäle. Fig. 3b entspricht dem Stand der Technik und dient der Verdeutlichung der Kanalaufteilung. Die optischen Kanäle 24a-i weisen eine Sortierung auf, so dass optische Kanäle 24g-1, 24g-2, 24g-3 und 24g-4, die einem annähernd gleichen Objektbereich zugeordnet sind, innerhalb der Reihe, d. h. Zeilenstruktur, maximal voneinander um den Abstand X1 getrennt sind.

Fig. 4a zeigt eine schematische Aufsicht auf den Abschnitt 23a der Multiaperturvorrichtung 21 mit der Sortierung der optischen Kanäle 24a-i, wie sie in der Fig. 3a gezeigt ist. Zwei benachbarte optische Kanäle, wie 24g und 24c, 24h und 24b, 24i und 24a, oder 24d und 24f können bezüglich der jeweiligen Position des Bildsensorbereichs des optischen Kanals einen maximalen Winkelabstand aufweisen, beispielsweise 180° für die optischen Kanäle 24g und 24c. In anderen Worten sind die Blickrichtungen zweier benachbarter optischer Kanäle um bis zu 180° gedreht oder gespiegelt. Benachbarte optische Kanäle wie beispielsweise 24c und 24h oder 24b und 24i weisen einen Winkelabstand zwischen 90° und 180° zueinander auf.

In anderen Worten sind benachbarte optische Kanäle 24a-i des Abschnitts 23a so angeordnet, dass sie eine maximale Differenz in ihrer Blickrichtung aufweisen können.

Die optischen Kanäle 24a-i können, wie es in der Fig. 4a dargestellt ist, so angeordnet sein, dass Mittelpunkte der jeweiligen optischen Kanäle 24a-i, d. h. die optischen Mittelpunkte, entlang oder auf einer Geraden 17 angeordnet sind. Das bedeutet, dass Abstände der Mittelpunkte der Bildsensorbereiche 25a-i bezüglich der Linie 17 variieren können. In anderen Worten sind die Mittelpunkte der optischen Kanäle 24a-i kollinear.

Fig. 4b zeigt eine schematische Aufsicht auf einen Abschnitt 23'a einer Multiaperturvorrichtung 21'. Die Sortierreihenfolge der optischen Kanäle 24a-i entlang der Linie 17 ist identisch zu der Sortierreihenfolge der Fig. 4a. Im Gegensatz zur Fig. 4a sind die optischen Kanäle 24a-i entlang der linearen Anordnung der Zeilenstruktur so in y-Richtung versetzt, dass Mittelpunkte bzw. Mitten der jeweiligen Bildsensorbereiche 25a-i kollinear an der Linie 17 angeordnet sind.

Alternativ können sowohl die Mitten der optischen Kanäle 24a-i als auch die Bildsensorbereiche 25a-i teilweise oder vollständig beabstandet von der Linie 17 angeordnet sein. Die Mittelpunkte bzw. Mitten können im Falle von quadratischen Querschnitten der optischen Kanäle 24a-i bzw. der Bildsensorbereiche 25a-i anhand des Schnittpunktes zweier diagonaler Linien, die je zwei gegenüberliegende Eckpunkte des Quadrates verbinden, ermittelt werden. Alternativ oder bei alternativ geformten optischen Kanälen 24a-i oder Bildsensorbereichen 25a-i können die Mitten bspw. anhand des geometrischen Flächenschwerpunktes oder Mittelpunktes ermittelbar sein. Alternativ kann auch eine Längsmittellinie eines optischen Kanals 24a-i oder Bildsensorbereichs 25a-i für eine Beschreibung der kollinearen oder von der Linie 17 beabstandeten Anordnung verwendet werden.

In anderen Worten sind in Fig. 4b die optischen Kanäle in gleicher Reihenfolge angeordnet wie in Fig. 4a, jedoch in y-Richtung, d.h. lateral zur Zeilenrichtung, derart verschoben, dass die Mittelpunkte der Teilimager, d. h. der Bildsensorbereiche 25a-i auf der Linie 17 liegen und eine Einhüllende einer aktiven Teilimagerfläche mithin eine minimale Ausdehnung in y-Richtung aufweisen kann. Hierdurch kann eine geringste Höhe, das heißt ein minimaler Flächenbedarf eines bspw. streifenförmig ausgeformten Bildsensors erreicht werden.

Die Fig. 4a und 4b zeigen lediglich eine Teilansicht der Multiaperturvorrichtung 21 bzw. 21'. Insgesamt besteht eine Zeile, eventuell abhängig von einem Superresolutionsfaktor, aus mehreren, beispielsweise vier Zellen, d. h. Abschnitten, 23 bzw. 23', die hintereinander und damit in einer Reihe angeordnet sein können. Die Teilimager, d. h. Bildsensorbereiche 25a-i sind in einer x/y-Richtung des Objektbereichs um eine Breite eines jeweiligen Pixels dividiert durch den Superresolutionsfaktor verschoben.

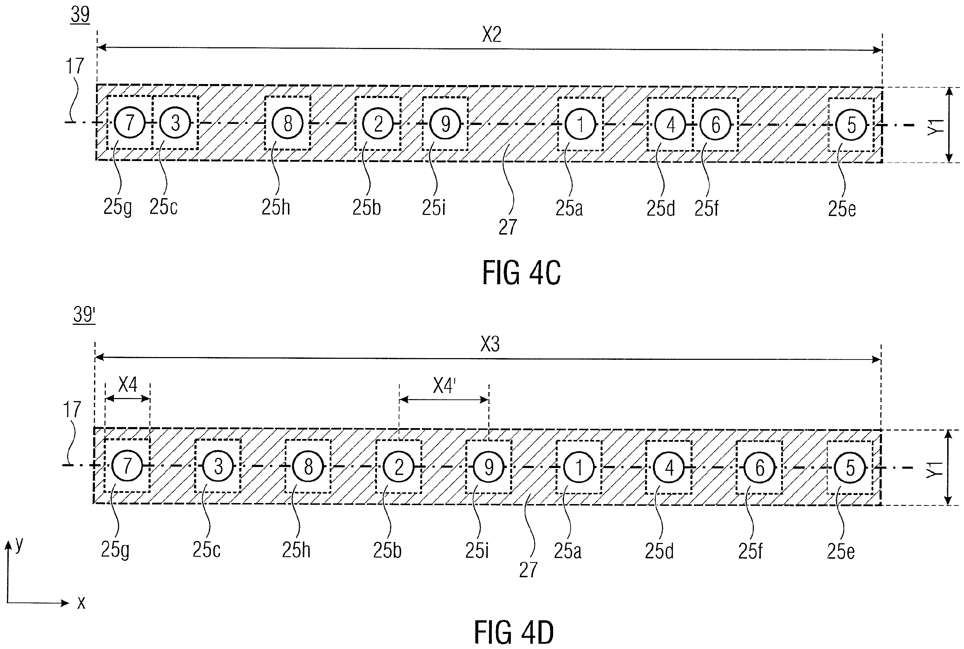

Fig. 4c zeigt eine Vorrichtung 39 mit einer Anordnung der Bildsensorbereiche 25a-i auf einem Substrat 27, wie sie aus einer Anordnung der optischen Kanäle gemäß Fig. 4b resultieren kann. Eine Anordnung der Mittelpunkte der Biidsensorbereiche 25a-i entlang einer Linie 17 kann in einer Breite Y1 des Substrats 27 resultieren, also mithin in einer kleinen Sensoroberfläche des Bildwandlers. Die im Vergleich zur in Fig. 4b in x-Richtung unveränderte Anordnung der Bildsensorbereiche 25a-i kann in einer Gesamtausdehnung in x-Richtung, X2, resultieren. Die Vorrichtung 39, bestehend aus dem Substrat 27 mit den Bildsensorbereichen 25a-i, kann man auch als Imager bezeichnen.

Durch eine Anordnung der Mittelpunkte der Bildsensorbereiche 25a-i kann insgesamt eine Reduzierung oder Minimierung des Flächenbedarfs des Substrats 27 erreicht werden, was zu Materialeinsparungen und mithin einer Kosten- und/oder Bauraumreduzierung führen kann. Der Füllfaktor des Bildsensors ist durch das Verhältnis der Gesamtfläche aller auf dem Bildsensor angeordneten und zu den Bildbereichen 25a-i beitragenden Pixel zu der Gesamtfläche des Bildsensors definiert.

In anderen Worten liegen die Mitten von Teilimagern 25a-i auf einer Linie, so dass eine Einhüllende, deren gesamte Ausdehnung in x- und y-Richtung näherungsweise einer Ausdehnung des Substrats 27 in x- und y-Richtung entsprechen kann, mit einer geringen, bzw. möglicherweise minimalen Ausdehnung Y1 senkrecht zu der Linie 17 in y-Richtung resultiert. Hieraus ergibt sich in y-Richtung ein geringer Flächenbedarf des Substrats 27, auf dem die Teilimager, d. h. Bildsensorbereiche 25a-i, angeordnet sind, und damit eine hohe Flächeneffizienz des Substrats 27 bzw. ein hoher Füllfaktor des Bildsensors.

Fig. 4d zeigt als ein weiteres Ausführungsbeispiel einen Imager 39', bei dem im Vergleich zu Fig. 4c die Bildsensorbereiche 25a-i äquidistant auf dem Substrat 27 angeordnet sind. Die einzelnen Bildsensorbereiche weisen dabei eine Ausdehnung in x-Richtung X4 bei einer Beabstandung von X4' auf. Letztere ist von einer Mitte eines jeweiligen Bildsensorbereichs zu einer Mitte des jeweilig lateral nächsten Bildsensorbereichs gemessen (in der Fig. 4d exemplarisch zwischen den Bildsensorbereichen 25b und 25i eingezeichnet). Aus dieser Anordnung kann eine Gesamtausdehnung in x-Richtung X3 resultieren.

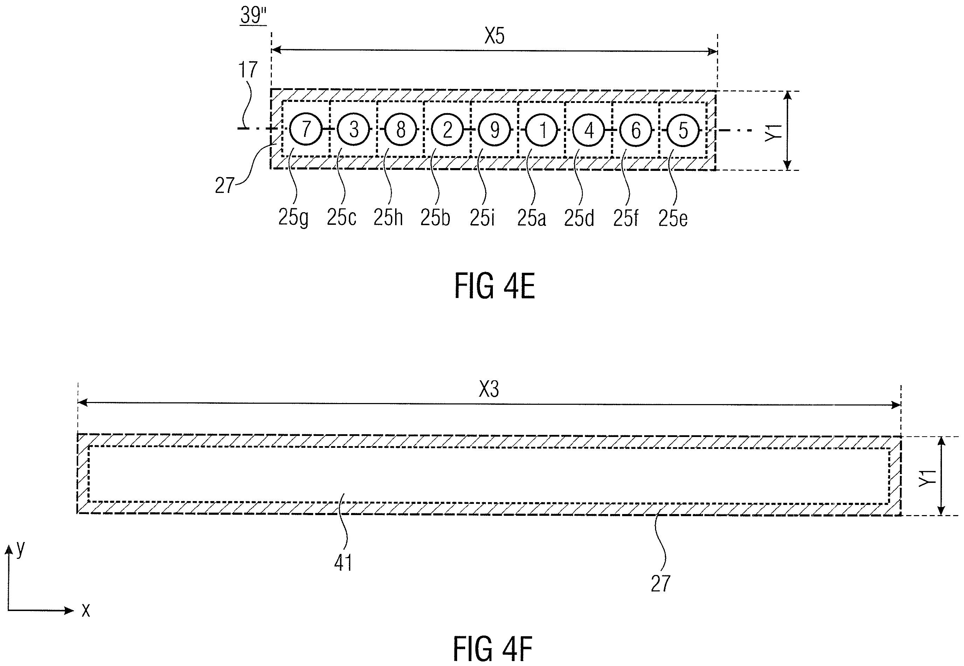

Fig. 4e zeigt ein weiteres Ausführungsbeispiel des Imagers 39". Im Gegensatz zur Fig. 4d sind die Bildsensorbereiche 25a-i hier dergestalt auf dem Substrat 27 angeordnet, dass keine Zwischenräume zwischen den jeweiligen Einzelbereichen angeordnet sind. Bei gleichbleibender Ausdehnung in y-Richtung Y1 kann die gesamte Vorrichtung im Vergleich zum Imager 39' (siehe Fig. 4d) in x-Richtung X5 geringer ausgedehnt sein.

Fig. 4f zeigt beispielhaft einen Imager, wie er aus der Vorrichtung 39' resultieren kann, wenn in den Zwischenräumen zwischen den Bildsensorbereichen 25a-i weitere Bildsensorbereiche angeordnet sind. In diesem Fall kann auf eine Unterteilung in einzelne Bereiche verzichtet werden. Man kann dann auch von einem länglichen und durchgehenden Pixelfeld 41 sprechen. Mit anderen Worten kann der Imager auch aus nur einem länglichen und durchgehenden Pixelfeld bestehen. Der Vollständigkeit halber sei noch erwähnt, dass der Verzicht auf eine Unterteilung in einzelne Bereiche in die im Vgl. zu Vorrichtung 39' unveränderten Ausdehnungen in x- und y-Richtung X3 und Y1 resultieren kann.

Vorteilhaft an den in den Figuren 4c-f gezeigten Imagern oder Bildwandlern ist, dass durch die Integration einer entsprechend ausgeformten Multiaperturvorrichtung zwischen den Hauptseiten einer Vorrichtung zur Objekterfassung eine Anforderung an Tiefenausdehnung bzw. Dicke der Vorrichtung zur Objekterfassung entspannt werden kann. In anderen Worten wird bei einer Unterbringung der Multiaperturvorrichtung zwischen den Hauptseiten der gesamten Vorrichtung zur Bilderfassung die Dicke der Vorrichtung möglicherweise von der Ausdehnung in y-Richtung, Y1, bestimmt.

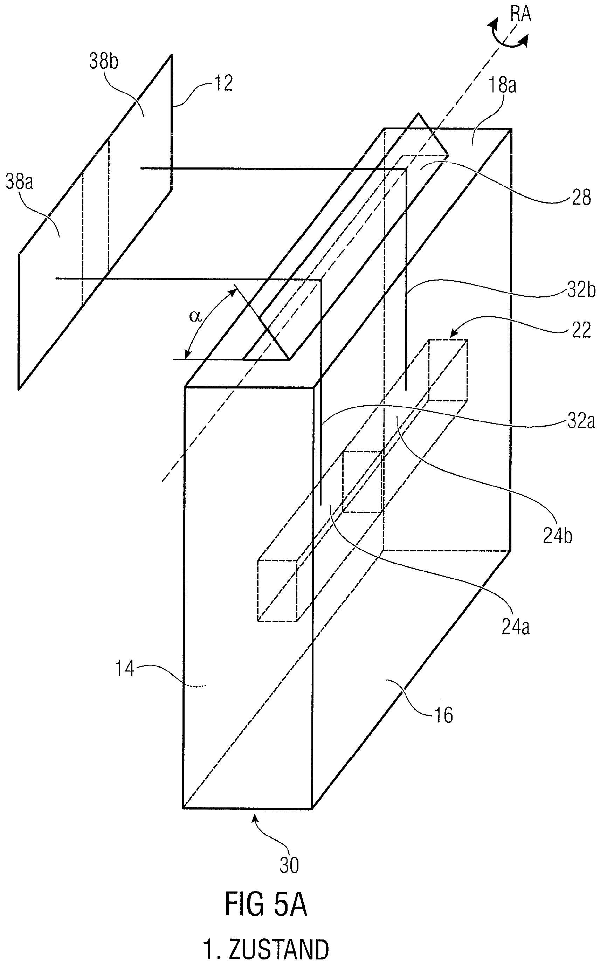

Fig. 5a zeigt eine perspektivische Ansicht einer Vorrichtung 30. Die Vorrichtung 30 umfasst dabei die erste Hauptseite 14, die zweite Hauptseite 16 und die Randseite 18a. Die Vorrichtung 30 weist weiterhin die Multiaperturvorrichtung 22 auf, die den optischen Kanal 24a sowie den optischen Kanal 24b umfasst. Die Vorrichtung 30 weist weiterhin das strahlumlenkende Element 28 auf, das exemplarisch in der Randseite 18a angeordnet ist. Das strahlumlenkende Element 28 ist um eine entlang der Randseite 18a verlaufende Rotationsachse RA drehbar ausgeformt. Alternativ kann die Rotationsachse RA quer zu den optischen Achsen 32a,b verlaufen. Das strahlumlenkende Element 28 ist gegenüber der Randseite 18a um einen starren oder veränderlichen Winkel α verkippt. Der Winkel α beträgt beispielsweise 45°, kann aber auch eine andere Gradzahl, etwa 50, 80 oder 90, aufweisen. Beträgt der Winkel α beispielsweise 45°, so kann die Multiaperturvorrichtung 22 den Objektbereich 12 entlang der optischen Achsen 32a und 32b erfassen. Die optischen Achsen 32a und 32b sind dabei jeweils den optischen Kanälen 24a und 24b zugeordnet . Der Objektbereich 12 ist parallel zur ersten Hauptseite 14 des Gehäuses angeordnet. Mit anderen Worten ist das strahlumlenkende Element 28 hier dafür ausgebildet, die optischen Achsen 32a und 32b in eine Richtung reflektiv umzulenken, die der ersten Hauptseite 14 zugewandt ist. Die Vorrichtung 30 mit der vorher beschriebene Position und Stellung des strahlumlenkenden Elements 28 kann dabei als in einem ersten Zustand befindlich bezeichnet werden. Der erste Zustand resultiert dabei aus der Stellung des strahlumlenkenden Elements 28 dergestalt, dass der erste Zustand des strahlumlenkenden Elements 28 auch den ersten Zustand der Vorrichtung 30 bedingt.

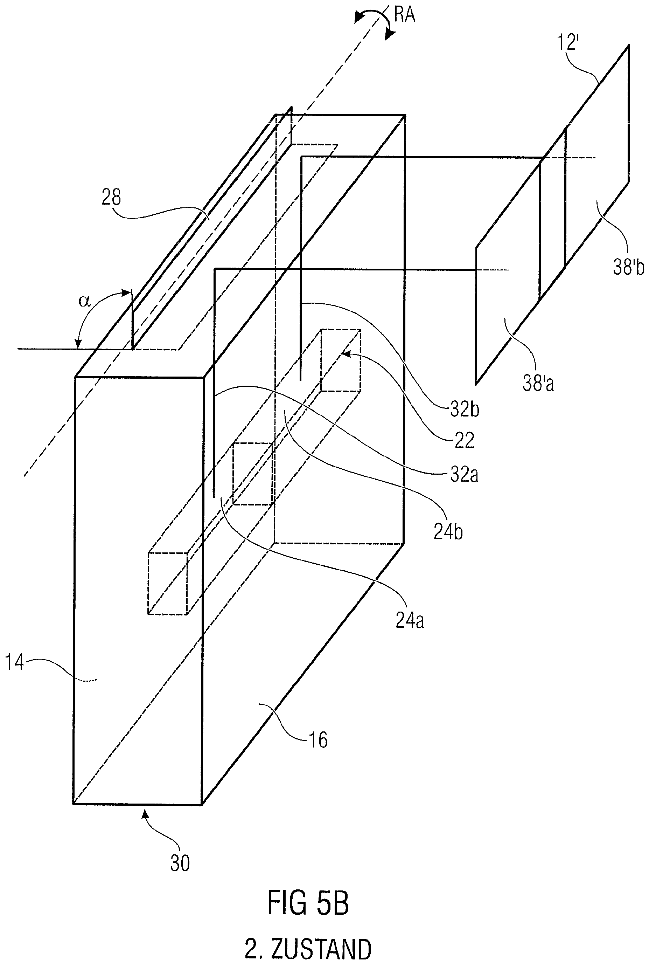

Fig. 5b zeigt abermals eine perspektivische Ansicht der Vorrichtung 30. Das strahlumlenkende Element 28 ist nunmehr dergestalt verkippt, dass es gegenüber der Randseite 18a den Winkel α von 135° einnimmt. In anderen Worten ist das strahlumlenkende Element 28 in Fig. 5b gegenüber dem strahlumlenkenden Element 28 in Fig. 5a um 90° verkippt. Das strahlumlenkende Element 28 ist ausgebildet, um die Erfassung eines zweiten Objektbereichs 12', der der zweiten Hauptseite 16 zugewandt ist, zu ermöglichen. Der Objektbereich 12' umfasst Teilbereiche 38'a und 38'b. Die in Fig. 5b gezeigte Konfiguration des strahlumlenkenden Elements 28 bedingt, dass die Vorrichtung 30 sich in einemzweiten Zustand befindet.

Die Vorrichtung 30 kann zwischen dem ersten Zustand und dem zweiten Zustand umschaltbar ausgeformt sein. Die Umschaltung kann beispielsweise manuell durch einen Benutzer oder automatisch durch eine entsprechende Steuerungshardware und/oder - software erfolgen. Die Vorrichtung 30 kann ferner ausgebildet sein, um in dem ersten Zustand für Videotelefonie und in dem zweiten Zustand zum Aufnehmen von Fotografien oder Videos verwendet zu werden. Vorteilhaft ist dabei, dass die Multiaperturvorrichtung 30 vermittels des strahlumlenkenden Elementes 28 sowohl zur Erfassung des ersten Objektbereichs 12 (der ersten Hauptseite 14 zugewandt), als auch zur Erfassung des zweiten Objektbereichs 12' (der zweiten Hauptseite 16 zugewandt), einsetzbar ist. Gegenüber dem Stand der Technik hebt sich diese Ausführungsform durch eine Komplexitätsreduktion ab, da durch die Verwendung eines entsprechend konfigurierten oder konfigurierbaren strahlumlenkenden Elements möglicherweise nicht mehr zwei unterschiedliche und/oder unterschiedlich orientierte Kameramodule zur Erfassung von zwei unterschiedlichen, d. h. unterschiedlich im Raum angeordneten oder positionierten Objektbereichen nötig sind.

Mit anderen Worten können durch die reflektive Strahlumlenkung also zwei Stellungen ermöglicht werden: Eine erste Stellung, die dadurch gekennzeichnet ist, dass die Blickrichtung nach vorne, mithin in Richtung der zweiten Hauptseite 16 (Strahlumlenkung +90° gegenüber der Randseite 18a) orientiert wird und eine zweite Stellung, die dadurch gekennzeichnet ist, dass die Blickrichtung nach hinten, mithin in Richtung der ersten Hauptseite 14 (Strahlumlenkung -90° gegenüber der Randseite 18a) orientiert wird. Vorteilhaft an dieser Ausführungsform ist, dass die verschiedenen Stellungen dabei ermöglichen können, dass die Multiaperturvorrichtung 22 jeweils die Funktion des ersten (primary) oder zweiten (secondary) Kameramoduls übernehmen kann. Eine Imagerebene ist dabei senkrecht zu einer Bildschirmebene, während Objektebenen parallel zu der Bildschirmebene sein können. Diese Ausführungsform kann man alternativ als eine Kamera mit adaptiver Strahlumlenkung bezeichnen.

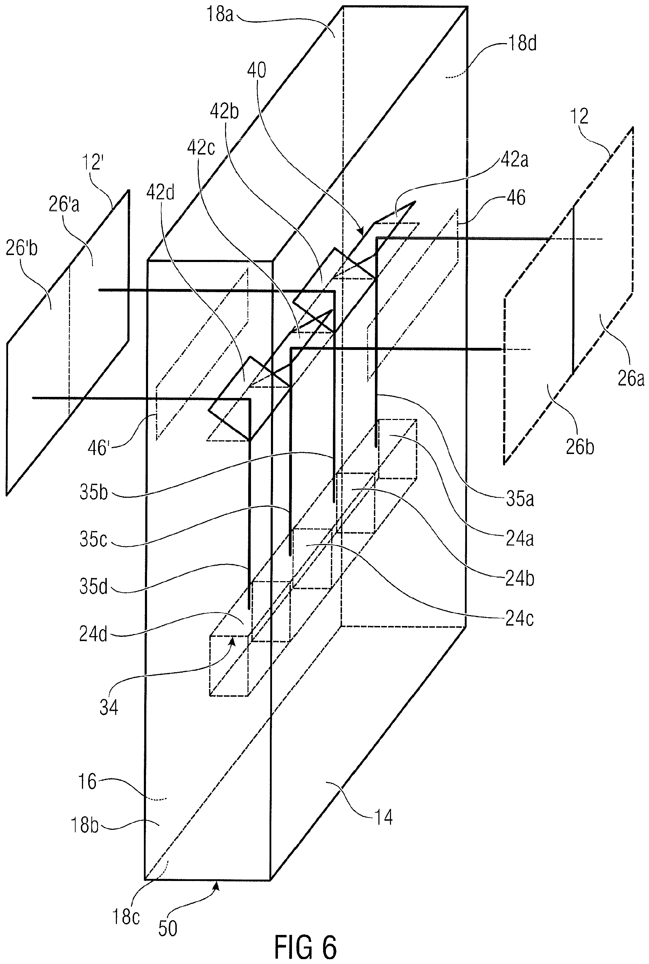

Fig. 6 zeigt eine perspektivische Ansicht einer Vorrichtung 50, die man als eine Modifikation der Vorrichtung 20 bezeichnen kann. Die Vorrichtung 50 umfasst ebenfalls die erste Hauptseite 14, die zweite Hauptseite 16 und die Randseiten 18a-d, die Multiaperturvorrichtung 34, die die optischen Kanäle 24a-d umfasst sowie das strahlumlenkende Element 40. Das strahlumlenkende Element 40 ist in der Vorrichtung 50 parallel zu der Randseite 18a angeordnet.

Den optischen Kanälen 24a-d sind nunmehr optische Achsen 35a, 35b, 35c und 35d jeweils zugeordnet. Diese weisen zwischen der Multiaperturvorrichtung 34 und dem strahlumlenkenden Element 40 einen näherungsweise parallelen Verlauf auf.

Die Teilelemente 42a-d sind nunmehr so ausgeformt, dass eine erste Gruppe (35a und 35c) von optischen Achsen 35a-d in Richtung der ersten Hauptseite 14 umgelenkt und eine zweite Gruppe (35b und 35d) von optischen Achsen 35 a-d in Richtung der zweiten Hauptseite 16 umgelenkt wird.

In der ersten Hauptseite 14 ist eine Öffnung 46 derart angeordnet, dass die optischen Kanäle 24a und 24c den Objektbereich 12 entlang der ersten Gruppe (35a und 35c) von optischen Achsen durch die Hauptseite 14 hindurch erfassen können. In der zweiten Hauptseite 16 ist weiterhin eine Öffnung 46' derart angeordnet, dass die optischen Kanäle 24b und 24d den Objektbereich 12' entlang der zweiten Gruppe (35b und 35d) von optischen Achsen durch die Hauptseite 16 hindurch erfassen können. Bei den Öffnungen 46 und 46' kann es sich bspw. um eine Blende, eine Sichtöffnung, ein Fenster etc. handeln.

Die Vorrichtung 50 kann zwei unterschiedliche, d. h. unterschiedlich angeordnete oder positionierte, Objektbereiche (12 und 12') gleichzeitig oder simultan erfassen. Die verschränkte oder alternierende Anordnung der einzelnen optischen Kanäle, wie sie bezugnehmend auf beispielsweise Fig. 4a oder 4b beschrieben wurde, kann dabei beispielsweise auch das Aufnehmen von Tiefeninformationen des jeweiligen Objektbereiches zulassen. Dabei ist es nicht zwingend, dass Kanäle, die den Objektbereich 12 ansehen, zu Kanälen, die den Objektbereich 12' abtasten, alternierend angeordnet sind. Ebenfalls denkbar ist, dass Gruppen von Kanälen, die den gleichen Objektbereich, d.h. 12 oder 12', abtasten, dasselbe Umlenkungselement nutzen. Beispielsweise können 100 Kanäle ausgeformt sein, um den Objektbereich 12 zu erfassen, gefolgt von, entlang der linearen Anordnung von Kanälen, 1000 weiteren Kanälen, die den Objektbereich 12'erfassen.

Es ist ebenfalls denkbar, das strahlumlenkende Element 40 so auszuformen, dass eine individuelle Veränderung der Position der jeweiligen Teilelemente 42a-d ermöglicht wird. Hierfür können die einzelnen Elemente 42a-d beispielweise jeweils entlang einer gemeinsamen oder jeweiligen Rotationsachse gegenüber der Randseite 18a in einem beliebigen Winkel verkippbar ausgestaltet sein. Mit anderen Worten kann eine zellenweise Anpassung oder Veränderung des strahlumlenkenden Elements 40 ermöglicht werden.

Alternativ kann sich bei dem strahlumlenkenden Element 40 auch um einen Spiegel handeln, der eine nichtebene, über Ausdehnung des gesamten Imagers diskontinuierliche oder facettierte Gestalt besitzt. Diese kann für jeden Kanal einer Multiaperturkamera unterschiedlich sein. Alternativ ist auch denkbar, dass der Spiegel eine nichtebene, über Ausdehnung des gesamten Imagers kontinuierliche Gestalt besitzt.

Bei der Vorrichtung 50 kann es sich beispielsweise um eine Kamera mit Strahlumlenkung handeln, bei der einige (optische) Kanäle durch ein Strahlumlenkungselement (etwa: Spiegel, plan oder gekrümmt/Freiform) auf eine Objektebene I, andere auf eine Objektebene II ausgerichtet sind. Die Imagerebene ist beispielsweise senkrecht zu einer Bildschirmebene, während die Objektebenen I und II parallel zu der Bildschirmebene sind. In anderen Worten wird die Objektebene I entlang einer Hauptblickrichtung einer Teilkamera I erfasst und die Objektebene II entlang einer Hauptblickrichtung einer Teilkamera II erfasst.

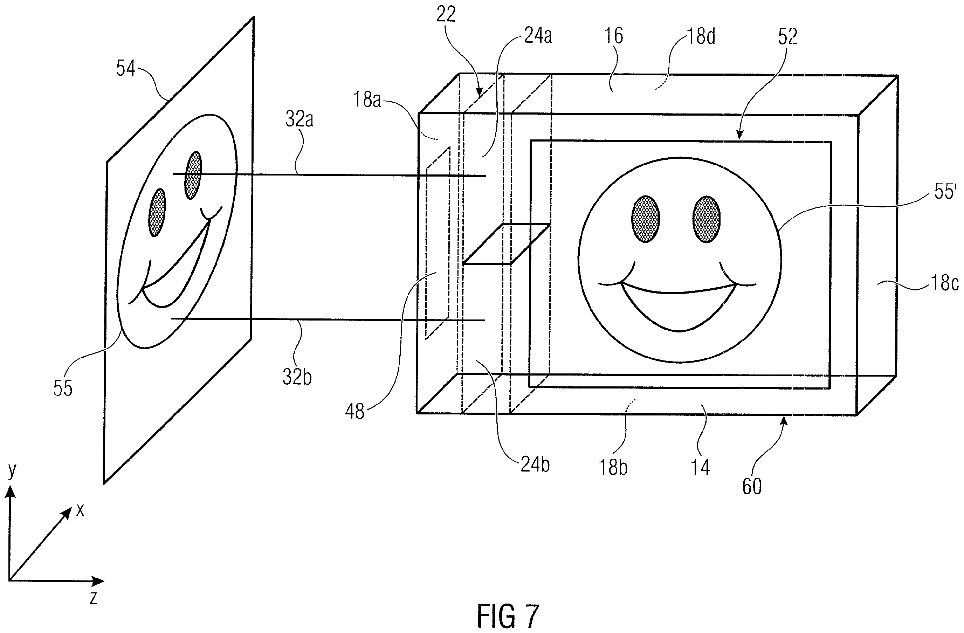

Fig. 7 zeigt eine perspektivische Ansicht einer Vorrichtung 60, die man als eine Modifikation der Vorrichtung 10 bezeichnen kann. Die Vorrichtung 60 umfasst ebenfalls die erste Hauptseite 14, die zweite Hauptseite 16 und die Randseiten 18a-d sowie die Multiaperturvorrichtung 22, die die optischen Kanäle 24a und 24b umfasst. Den optischen Kanälen 24a und 24b sind die optischen Achsen 32a und 32b zugeordnet.

Die Vorrichtung 60 ist zur Erfassung eines Objektbereichs 54 ausgeformt. Der Objektbereich 54 ist parallel zu der Randseite 18a angeordnet und weist ein Objekt 55 auf, dass von der Multiaperturvorrichtung 22 entlang der lateral (in z-Richtung) verlaufenden optischen Achsen 32a und 32b erfasst werden kann. Die optischen Achsen 32a und 32b treten hierzu durch eine Öffnung 48 durch die Randseite 18a hindurch. Ihr Verlauf kann als abschnittsweise parallel bezeichnet werden.

Die Vorrichtung 60 weist ferner einen Bildschirm 52 auf, der exemplarisch in der ersten Hauptseite 14 angeordnet ist. Der Bildschirm 52 weist eine Ausdehnung in y- und z-Richtung auf und kann eine zumindest halb so große Flächenausdehnung wie die erste Hauptseite 14 aufweisen. Auch eine Flächenausdehnung, die kleiner, gleich groß oder größer ist als die Flächenausdehnung der ersten Hauptseite, ist denkbar. Der Bildschirm 52 kann für eine Darstellung einer Abbildung ausgestaltet sein. Das Objekt 55 kann beispielsweise erfasst und einem Benutzer als Abbildung 55' bereitgestellt werden. Diese Abbildung 55' des Objekts 55 ist exemplarisch in dem Bildschirm 52 angeordnet.

Die Vorrichtung 60 ist zur Erfassung eines den beiden Hauptseiten 14 und 16 abgewandter Objektbereichs ausgeformt. Mit anderen Worten kann also ein zu der Randseite 18a parallel angeordneter Objektbereich erfasst werden. Man kann in diesem Fall auch von einer Imagerebene (vgl. 31 in Fig. 1) sprechen, die senkrecht zu einer Bildschirmebene angeordnet ist.

In anderen Worten kann bei der Vorrichtung 60 eine Kamera einen Objektbereich in Geradeaussicht (ohne Umlenkung) entlang einer Hauptblickrichtung erfassen.

Da das Objekt 55 mit zumindest zwei optischen Kanälen 24a und 24b erfasst wird, kann die Abbildung 55' auch Tiefeninformationen aufweisen.

Es kann sich bei der Vorrichtung 60 beispielsweise um eine Multiaperturkamera mit Aufteilung des Gesichtsfelds in linearer Ausführung in einem Smartphone handeln. Vorteilhaft ist dabei eine mögliche Unterbringung (der Multiaperturkamera) an der Stirnseite des Smartphones. Ebenfalls denkbar ist, dass die Multiaperturvorrichtung 22 einen Imager aufweist, der, wie in der Fig. 4f gezeigt, nur aus einem länglichen und durchgehenden Pixelfeld besteht.

Vorteilhaft an dieser Ausführungsform ist, dass die Kamera aus einem schmalen Streifen bestimmt ist. Dadurch ist eine geringere Dicke des Smartphones möglich.

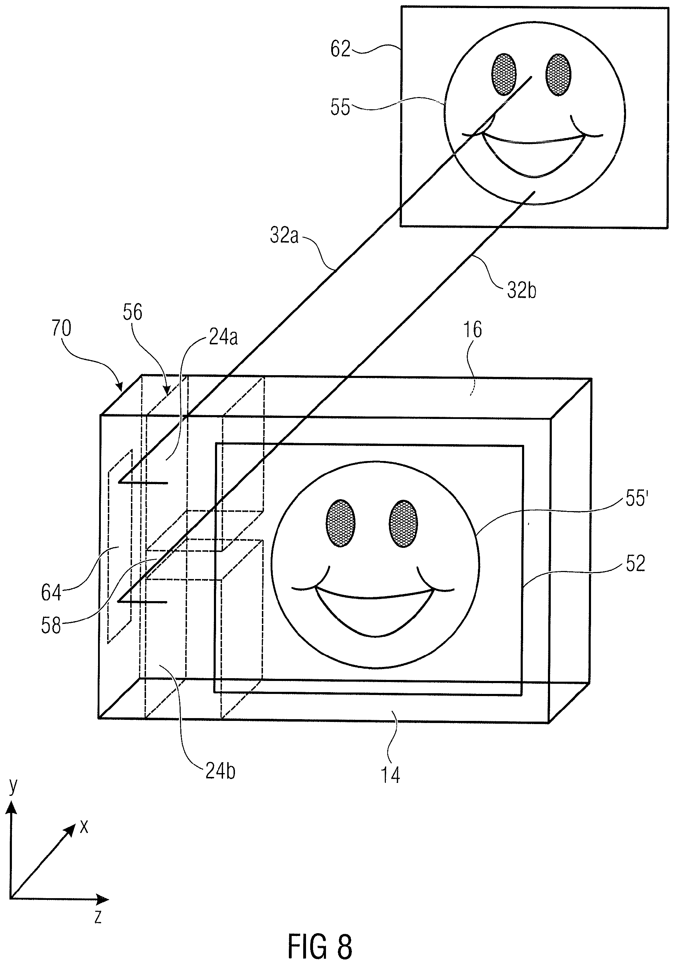

Fig. 8 zeigt eine perspektivische Ansicht einer Vorrichtung 70, die als Modifikation der Vorrichtung 60 bezeichnet werden kann. An der Position der Multiaperturvorrichtung 22 (siehe Fig. 7) ist nun eine Multiaperturvorrichtung 56 angeordnet, die zusätzlich zu den optischen Kanälen 24a und 24b eine Blitzlichtvorrichtung 58 aufweist. Diese ist exemplarisch zwischen den optischen Kanälen 24a und 24b angeordnet und zur Beleuchtung eines Objektbereichs 62 ausgebildet. Der Objektbereich 62 ist parallel zu der zweiten Hauptseite 16 angeordnet und weist das Objekt 55 auf.

Aus der Anordnung der Blitzlichtvorrichtung 58 in der Multiaperturvorrichtung 56 kann eine Entspannung von Designanforderungen bezüglich der Tiefenausdehnung der Blitzlichtvorrichtung resultieren. Ebenfalls vorteilhaft ist, dass eine entsprechende Steuerung und/oder Verknüpfung der Blitzlichtvorrichtung mit den anderen Elementen der Multiaperturvorrichtung 56 durch die räumliche Nähe bequem erfolgen könnte. Die Blitzlichtvorrichtung 56 kann beispielsweise mit einer oder mehr Light Emitting Diodes (LEDs) ausgeführt sein, aber auch andere Ausführungsformen sind denkbar. Alternativ kann eine Integration der Multiaperturvorrichtung 56 und damit der Blitzlichtvorrichtung 58 an einer Stirnseite der Vorrichtung 70 erfolgen.

An der Position der Öffnung 48 (siehe Fig. 7) ist nun ein strahlumlenkendes Element 64 angeordnet. Das strahlumlenkende Element 64 ist ausgebildet, um die optischen Achsen 32a und 32b von einem lateralen Verlauf (in z-Richtung) hin zu einem nicht-lateralen Verlauf (in x-Richtung) umzulenken, so dass der Objektbereich 62 und mithin das darin angeordnete Objekt 55 von den optischen Kanälen 24a und 24b erfasst werden kann.

Das strahlumlenkende Element 64 ist weiterhin ausgebildet, um von der Blitzlichtvorrichtung 58 emittierte elektromagnetische Wellen (ugs. Licht) in Richtung der zweiten Hauptseite 16 umzulenken. Der Objektbereich 62 kann also mithin erleuchtet werden. In anderen Worten kann für die Blitzlichtvorrichtung 58 also eine Nutzung von Strahlumlenkungselementen (Spiegel) ermöglicht werden. Die Blitzlichtvorrichtung 58 kann weiterhin zur Nutzung von einem reflektiven und/oder refraktiven Strahlumlenkungselement ausgeformt sein.

Das strahlumlenkende Element 64 kann starr ausgebildet sein, so dass die Umlenkung der optischen Achsen 32a,b und des von der Blitzlichtvorrichtung 58 emittierten Lichts in unveränderlicher Weise erfolgt. Es ist aber auch denkbar, dass das strahlumlenkende Element 64 veränderbar gebildet ist. Handelt es sich bei dem strahlumlenkenden Element 64 beispielsweise um einen Spiegel oder jegliche elektromagnetische Wellen reflektierende Oberfläche, so kann dieser oder diese beispielsweise um eine Rotationsachse drehbar gelagert sein. Eine Veränderung resp. Verstellung der Position des strahlumlenkenden Elements 64 könnte manuell oder von einer entsprechenden Steuerungsvorrichtung oder -Software gesteuert und/oder automatisiert erfolgen.

Es kann also bspw. eine Strahlumlenkung mittels einem einfachen durchgehenden Planspiegel ermöglicht werden. Dabei kann die Spiegelebene um 45° geneigt zur Bildschirmebene sein. Diese Konfiguration kann möglicherweise durch eine Umlenkung der Hauptblickrichtung in Richtung der zweiten Hauptseite beschrieben werden.

Aus der hier beschriebenen Konfiguration von Multiaperturvorrichtung, Blitzlichtvorrichtung und strahlumlenkenden Element können weitere vorteilhafte Ausführungsformen der Vorrichtung zur Objekterfassung resultieren.

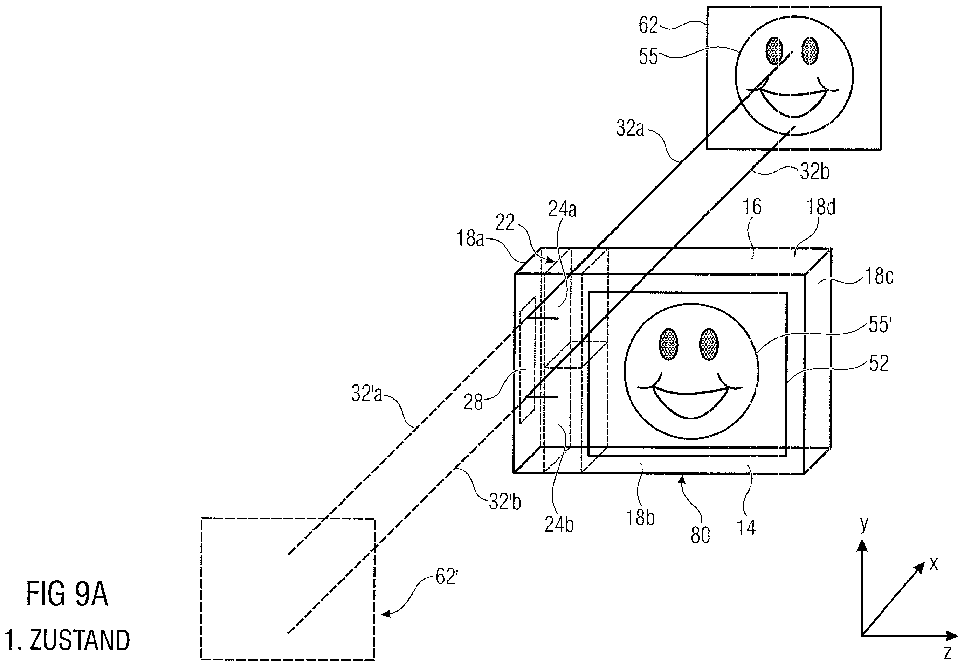

Fig. 9a zeigt als weiteres Ausführungsbeispiel eine Vorrichtung 80, die aus der Vorrichtung 30 abgeleitet werden kann, in einem ersten Zustand. Der erste Zustand resultiert dabei aus der Stellung des strahlumlenkenden Elements 28 dergestalt, dass der erste Zustand des strahlumlenkenden Elements 28 auch den ersten Zustand der Vorrichtung 80 bedingt. Der erste Zustand kann die Erfassung des der zweiten Hauptseite 16 zugewandten Objektbereichs 62 ermöglichen.

Das strahlumlenkende Element 28 ermöglicht ferner die Umlenkung der optischen Achsen 32a und 32b hin zu optischen Achsen 32'a und 32'b und die Erfassung eines zweiten Objektbereichs 62', der der ersten Hauptseite 14 zugewandt ist. Diese Konfiguration kann als zweiter Zustand bezeichnet werden.

Die Vorrichtung 80 weist weiterhin einen Bildschirm 52 auf, der wie bei der Vorrichtung 60 (siehe Fig. 7) zur Darstellung einer Abbildung 55' eines erfassten Objekts 55 ausgeformt sein kann.

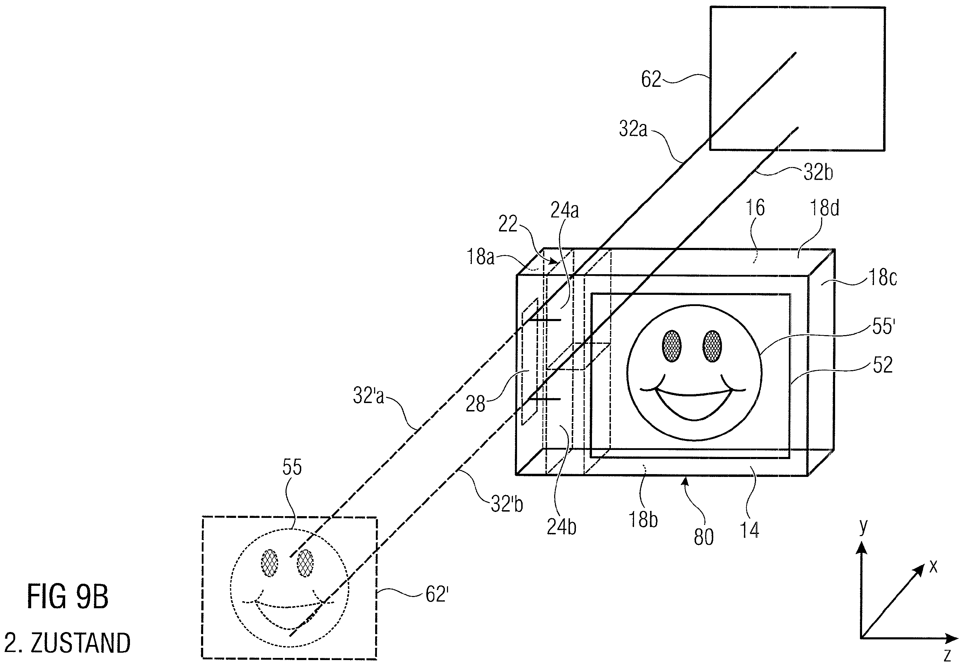

Fig. 9b zeigt die Vorrichtung 80 in einem zweiten Zustand. Die optischen Achsen 32a und 32b sind nun auf die optischen Achsen 32'a und 32'b abgebildet. Die Vorrichtung 80 kann in dieser Konfiguration zur Erfassung des Objektbereichs 62' ausgebildet sein. Das zu erfassende Objekt 55 ist daher exemplarisch in dem Objektbereich 62' angeordnet.

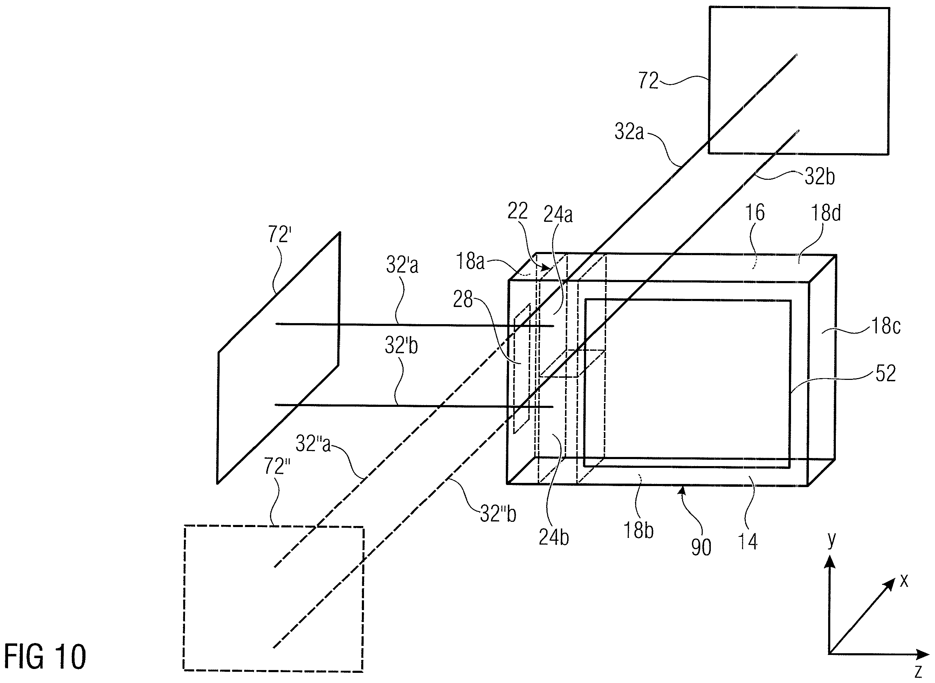

Fig. 10 zeigt als ein weiteres Ausführungsbeispiel eine Vorrichtung 90, die als Modifikation der Vorrichtung 80 bezeichnet werden kann. Das strahlumlenkende Element 28 ist nun ausgestaltet, um eine Erfassung dreier unterschiedlicher Objektbereiche 72, 72' und 72" entlang optischer Achsen 32a und 32b, 32'a und 32'b sowie 32"a und 32"b zu ermöglichen. Die optischen Achsen 32a und 32b können mit anderen Worten vermittels des strahlumlenkenden Elements 28 auf optische Achsen 32'a und 32'b oder 32"a und 32"b jeweils abgebildet werden. Alternativ können bspw. auch die optischen Achsen 32'a und 32'b auf die optischen Achsen 32a und 32b oder die optischen Achsen 32"a und 32"b abgebildet werden, oder die optischen Achsen 32"a und 32"b auf die optischen Achsen 32'a und 32'b usw. Alternativ kann eine Umlenkung so erfolgen, dass drei verschiedene unterschiedlich angeordnete Objektbereiche 12, 12' und 12" erfasst werden können.

Es können also möglicherweise drei Stellungen unterschieden werden: eine erste Stellung, die sich dadurch auszeichnet, dass die Blickrichtung nach vorne (Umlenkung +90°) umgelenkt wird, eine zweite Stellung, die sich dadurch auszeichnet, dass die Blickrichtung seitlich bzw. nicht umgelenkt wird (keine Umlenkung oder 0°) und eine dritte Stellung, die sich dadurch auszeichnet, dass die Umlenkung nach hinten erfolgt (Umlenkung -90°). Es können also möglicherweise drei unterschiedliche Objektebenen, die unterschiedlich im Raum positioniert und/oder orientiert sein können, mit einer einzigen Multiaperturvorrichtung 22 erfasst werden. Auch hier ist vorstellbar, dass einem Benutzer der zu erfassende Objektbereich 72, 72' oder 72" bzw. ein evtl. in dem jeweiligen Objektbereich jeweils angeordnetes Objekt mithilfe eines in der ersten Hauptseite 14 angeordneten Bildschirms 52 dargestellt wird.

In anderen Worten kann eine (zusätzliche) Strahlumlenkung durch fixe/bewegliche reflektive Komponenten erfolgen. Hierbei sind zwei, drei oder mehrere Positionen möglich. Die Umlenkung kann beispielsweise an einem planen Spiegel bzw. einem über alle Zellen kontinuierlichen Spiegel, aber auch über einen zellenweise angepassten Spiegel erfolgen.

## Patentansprüche

1. Vorrichtung (10; 20; 30; 50; 60; 70; 80; 90) zur Erfassung eines Objektbereichs (12; 12'; 54; 62; 62'; 72; 72'; 72"), mit folgenden Merkmalen:
einem flachen Gehäuse mit einer ersten Hauptseite (14), einer gegenüberliegend angeordneten zweiten Hauptseite (16) und einer zwischen der ersten Hauptseite (14) und der zweiten Hauptseite (16) angeordneten Randseite (18a); und
einer Multiaperturvorrichtung (22; 34; 21; 21' 39; 39', 39"; 56), mit
einer Mehrzahl von lateral nebeneinander angeordneten und der Randseite (18a) zugewandten optischen Kanälen (24a-i), wobei jeder optische Kanal (24a-i) zur Erfassung eines jeweiligen Teilbereichs (26a; 26b; 26'a; 26'b; 38a; 38b; 44a; 44b; 38'a; 38'b) des Objektbereichs (12; 12'; 54; 62; 62'; 72; 72'; 72") durch die Randseite (18a) hindurch oder entlang einer optischen Achse (32a; 32b; 32'a; 32'b; 32"a; 32"b; 37a-d; 37'a-d; 35a-d) des jeweiligen optischen Kanals (24a-i), die zwischen einem der Randseite (18a) zugewandten lateralen Verlauf innerhalb des Gehäuses und einem nicht-lateralen Verlauf außerhalb des Gehäuses umgelenkt wird, ausgebildet ist, wobei die Teilbereiche (26a; 26b; 26'a; 26'b; 38a; 38b; 44a; 44b; 38'a; 38'b) der optischen Kanäle (24a-i) den Objektbereich (12; 12'; 54; 62; 62'; 72; 72'; 72") abdecken;
wobei die optischen Kanäle (24a-i) durch die Erfassung des jeweiligen Teilbereichs (26a; 26b; 26'a; 26'b; 38a; 38b; 44a; 44b; 38'a; 38'b) jeweils nur teilweise den Objektbereich abdecken und in Gänze zusammen den gesamten Objektbereich (12) abdecken;
wobei die Mehrzahl von optischen Kanälen (24a-i) ein eindimensionales Array bildet, und Mitten der Mehrzahl von Teilbereichen (26a; 26b; 26'a; 26'b; 38a; 38b; 44a; 44b; 38'a; 38'b) in einer ersten Richtung (y) nebeneinander liegen, um ein eindimensionales Array zu bilden und quer zu einer Anordnung der optischen Kanäle (24a-i) in einer zweiten Richtung (x) angeordnet sind.

2. Vorrichtung gemäß Anspruch 1, wobei die Mehrzahl von optischen Kanälen (24a-d) eine erste Gruppe (24a; 24c) von optischen Kanälen (24a-d) und eine zweite Gruppe (24b; 24d) von optischen Kanälen (24a-d) umfasst, wobei die erste Gruppe (24a; 24c) von optischen Kanälen (24a-d) einen ersten Teilbereich (38a; 44a) des Objektbereichs (12, 12') erfasst und die zweite Gruppe (24b; 24d) von optischen Kanälen (24a-d) einen zweiten Teilbereich (38b; 44b) des Objektbereichs (12; 12') erfasst.

3. Vorrichtung gemäß Anspruch 2, wobei sich der erste Teilbereich (38a; 44a) und der zweite Teilbereich (38b; 44b) zumindest teilweise überlappen.

4. Vorrichtung gemäß einem der Ansprüche 2 oder 3, wobei eine Anzahl der optischen Kanäle (24a-i) der ersten Gruppe gleich einer Anzahl der optischen Kanäle (24a-i) der zweiten Gruppe ist.

5. Vorrichtung gemäß einem der Ansprüche 2-4, wobei Mittelpunkte von Pixelarrays von Bildsensorbereichen (25a-i) der optischen Kanäle (24a-i) der ersten Gruppe bzgl. Mittelpunkten von zugehörigen Abbildungsoptiken (29a; 29b) der optischen Kanäle (24a-i) der ersten Gruppe um den Bruchteil eines Pixelpitches lateral zueinander verschoben sind, so dass der erste Teilbereich (38a; 44a) durch zumindest zwei der optischen Kanäle (24a-i) der ersten Gruppe um einen Subpixelversatz lateral gegeneinander verschoben abgetastet wird.

6. Vorrichtung gemäß einem der Ansprüche 2-5, wobei die optischen Kanäle (24a-i) der ersten und zweiten Gruppe in einer einzeiligen Struktur verschränkt angeordnet sind.

7. Vorrichtung gemäß einem der Ansprüche 2-6, wobei optische Zentren von Optiken (29a; 29b) der optischen Kanäle (24a-i) der ersten und zweiten Gruppe auf einer ersten Linie (17) liegen und Mitten von Bildsensorbereichen (25a-i) der optischen Kanäle (24a-i) der ersten und zweiten Gruppe gegenüber einer Projektion der optischen Zentren auf eine zweite Linie in einer Bildebene (31), in der die Bildsensorbereiche der ersten und zweiten Gruppe von Kanälen liegen, in der Bildebene (31) versetzt sind.

8. Vorrichtung gemäß einem der Ansprüche 2-6, wobei Mitten von Bildsensorbereichen (25a-i) der optischen Kanäle (24ai) der ersten und zweiten Gruppe auf einer ersten Linie liegen und optische Zentren von Optiken (29a; 29b) der optischen Kanäle (24a-i) der ersten und zweiten Gruppe gegenüber einer Projektion der Mitten von Bildsensorbereichen (25a-i) auf eine zweite Linie in einer Optikebene (33), in der die Optiken der optischen Kanäle (24a-i) der ersten und zweiten Gruppe liegen,in der Optikebene (33) versetzt sind.

9. Vorrichtung gemäß einem der Ansprüche 1-8, wobei die Vorrichtung ein strahlumlenkendes Element (28; 40; 64) aufweist, das ausgebildet ist, um die optischen Achsen (32a; 32b; 32'a; 32'b; 32"a; 32"b; 37a-d; 37'a-d; 35a-d) der Mehrzahl von optischen Kanälen (24a-i) in einem ersten Zustand in eine Richtung umzulenken, die der ersten Hauptseite (14) zugewandt ist, und in einem zweiten Zustand in eine Richtung umzulenken, die der zweiten Hauptseite (16) zugewandt ist, wobei das strahlumlenkende Element (28; 40; 64) zwischen dem ersten Zustand und dem zweiten Zustand umschaltbar ist.

10. Vorrichtung gemäß Anspruch 9, wobei das strahlumlenkende Element (28; 40; 64) aufweist:
einen starren Körper mit einer spiegelnden Oberfläche, der drehbar um eine Rotationsachse (RA) gelagert ist, die quer zu den optischen Achsen (32a; 32b; 32'a; 32'b; 32"a; 32"b; 37a-d; 37'a-d; 35a-d) der Mehrzahl der optischen Kanäle (24a-i) oder entlang der Randseite (18a) verläuft, um zwischen dem ersten Zustand und dem zweiten Zustand umzuschalten.

11. Vorrichtung gemäß einem der vorangegangenen Ansprüche, wobei die Multiaperturvorrichtung (22; 34; 21; 21' 39; 39', 39"; 56) ferner eine weitere Mehrzahl von optischen Kanälen (24a-i) aufweist, von denen jeder zur Erfassung eines jeweiligen Teilbereichs (26a; 26b; 26'a; 26'b; 38a; 38b; 44a; 44b; 38'a; 38'b) eines weiteren Objektbereichs (12; 12'; 54; 62; 62'; 72; 72'; 72") entlang einer weiteren optischen Achse (32a; 32b; 32'a; 32'b; 32"a; 32"b; 37a-d; 37'a-d; 35a-d), die zwischen einem lateralen Verlauf und einem nicht-lateralen Verlauf umgelenkt wird, ausgebildet ist.

12. Vorrichtung gemäß einem der vorangegangenen Ansprüche, wobei die erste Hauptseite (14) einen Bildschirm (52) aufweist.

13. Vorrichtung gemäß einem der vorangegangenen Ansprüche, wobei die Vorrichtung ein Mobiltelefon, ein Computerbildschirm oder ein TV-Gerät ist.
